(19) Europäisches Patentamt
European Patent Office
Office européen des brevets

(11) Veröffentlichungsnummer: **0 048 693**
**B1**

# (12) EUROPÄISCHE PATENTSCHRIFT

(45) Veröffentlichungstag der Patentschrift: **08.01.86**

(51) Int. Cl.⁴: **C 09 B 33/12,** C 09 B 45/24 // D06P3/04, D06P3/32

(21) Anmeldenummer: **81810380.6**

(22) Anmeldetag: **14.09.81**

(54) **Disazofarbstoffe, Metallkomplexe dieser Farbstoffe, deren Herstellung und Verwendung.**

(30) Priorität: **19.09.80 CH 7060/80**

(43) Veröffentlichungstag der Anmeldung: **31.03.82 Patentblatt 82/13**

(45) Bekanntmachung des Hinweises auf die Patenterteilung: **08.01.86 Patentblatt 86/2**

(84) Benannte Vertragsstaaten: **CH DE FR GB LI**

(56) Entgegenhaltungen:
**FR - A - 1 435 151**
**GB - A - 1 399 296**
**GB - A - 2 047 729**

(73) Patentinhaber: **CIBA-GEIGY AG, Klybeckstrasse 141, CH-4002 Basel (CH)**

(72) Erfinder: **Beffa, Fabio, Dr., Burgstrasse 38, CH-4125 Riehen (CH)**

**EP 0 048 693 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft metallisierbare Disazofarbstoffe der Formel (1)

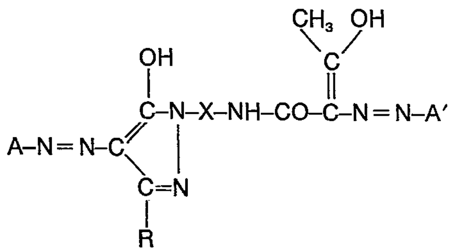

(1),

worin

A und A′ unabhängig voneinander je den Rest einer Diazokomponente der Benzol- oder Naphthalinreihe bedeuten, wobei mindestens eine der Gruppen A oder A′ in o-Stellung zur Azogruppe eine metallisierbare Hydroxy- oder Carboxygruppe trägt,

X gegebenenfalls substituiertes Phenylen, Naphthylen oder $C_2$–$C_4$-Alkylen und

R $C_1$–$C_4$-Alkyl, COO–Q oder $CONQQ_1$ bedeutet, wobei Q und $Q_1$ je Wasserstoff oder $C_1$–$C_4$-Alkyl darstellen,

sowie deren Metallkomplexe.

Die Reste A und A′ können verschieden oder vorzugsweise gleich sein. Sie können noch einen oder mehrere weitere Substituenten tragen, z.B. niedermolekulares Alkyl oder Alkoxy, Chlor, Brom, Nitro, Cyano, Sulfo oder Acylamino. Unter niedermolekularen Alkyl- oder Alkoxygruppen sind solche mit 1–6, vorzugsweise 1–2 C-Atomen zu verstehen und mit «Acylamino» werden niedrigmolekulare Alkanoylamino-, Alkylsulfonylamino- und Alkoxycarbonylaminoreste sowie Aroylamino- und Arylsulfonylaminoreste bezeichnet.

Die Reste A und A′ leiten sich beispielsweise von folgenden Aminen ab:

Anthranilsäure, 4- oder
5-Sulfoanthranilsäure, 2-Amino-1-hydroxybenzol,
4-Chlor- und 4,6-Dichlor-2-amino-1-hydroxybenzol,
4- oder 5-Nitro-2-amino-1-hydroxybenzol,
4-Chlor- und 4-Methyl- und 4-Acetylamino-6-nitro-2-amino-1-hydroxybenzol,
6-Acetylamino- und 6-Chlor-4-nitro-2-amino-1-hydroxybenzol,
4-Cyan-2-amino-1-hydroxybenzol,
4-Methoxy-2-amino-1-hydroxybenzol,
4-Methoxy-5-chlor-2-amino-1-hydroxybenzol,
4-Methyl-2-amino-1-hydroxybenzol,
4-Chlor-5-nitro-2-amino-1-hydroxybenzol,
3,4,6-Trichlor-2-amino-1-hydroxybenzol,
6-Acetylamino-4-chlor-2-amino-1-hydroxybenzol,
4,6-Dinitro-2-amino-1-hydroxybenzol,
2-Amino-1-hydroxybenzol-4- oder
5-sulfosäure, 4-Nitro-2-amino-1-hydroxybenzol-6-sulfosäure,
5-Nitro- oder 6-Nitro-2-amino-1-hydroxybenzol-4-sulfosäure,
4-Chlor-2-amino-1-hydroxybenzol-6-sulfosäure,
1-Amino-2-hydroxy-naphthalin-4-sulfosäure,
1-Amino-2-hydroxy-6-nitronaphthalin-4-sulfosäure,
2-Amino-1-hydroxybenzol-4,6-disulfosäure
oder
6-Chlor-2-amino-1-hydroxybenzol-4-sulfosäure.

Vorzugsweise weisen sowohl A als auch A′ in o-Stellung zur Azobrücke eine Hydroxy- oder Carboxygruppe auf, einer der Reste A oder A′ kann jedoch frei von diesen Gruppen sein. In diesem Falle kommen z.B. Benzol- oder Naphthalinreste in Frage, welche gegebenenfalls ein- oder mehrmals durch gleiche oder verschiedene Substituenten aus der Reihe Sulfo, Chlor, Nitro, $C_1$–$C_4$-Alkyl oder $C_1$–$C_4$-Alkoxy substituiert sind.

In besonders bevorzugten Farbstoffen sind A und A′ der Rest eines 1-Hydroxy-2-aminobenzols, welcher durch Chlor, Nitro und/oder Sulfo substituiert ist, insbesondere der Rest eines 1-Hydroxy-2-aminonitrobenzols, welcher noch eine Sulfogruppe trägt.

In den Disazofarbstoffen der obengenannten Formel (1) bedeutet X eine $C_2$–$C_4$-Alkylengruppe, wie Ethylen, Propylen oder Butylen, oder eine gegebenenfalls durch Sulfo, Halogen, wie Chlor oder Brom, $C_1$–$C_4$-Alkyl, oder $C_1$–$C_4$-Alkoxy substituierte Phenylen- oder Naphthylengruppe. Vorzugsweise stellt X die unsubstituierte Phenylengruppe dar.

R stellt eine $C_1$–$C_4$-Alkylgruppe, wie Methyl, Ethyl oder eine Carboxy-, $C_1$–$C_4$-Carboalkoxygruppe oder Carboxamidogruppe dar, wobei einer oder beide Amidwasserstoffatome durch $C_1$–$C_4$-Alkyl ersetzt sein können. Vorzugsweise stellt R die Methylgruppe dar.

Ein bevorzugter Gegenstand der vorliegenden Anmeldung sind Metallkomplexfarbstoffe, insbesondere Chrom- oder Kobaltkomplexfarbstoffe, welche mindestens einen Disazofarbstoff der oben angegebenen Formel (1) enthalten. Die Metallisierung kann auch auf dem zu färbenden Material erfolgen. Vorzugsweise wird jedoch zunächst der Metallkomplexfarbstoff hergestellt und dieser dann mit dem zu färbenden Material in Kontakt gebracht.

Eine bevorzugte Gruppe von erfindungsgemässen Metallkomplexfarbstoffen sind diejenigen der Formel (2)

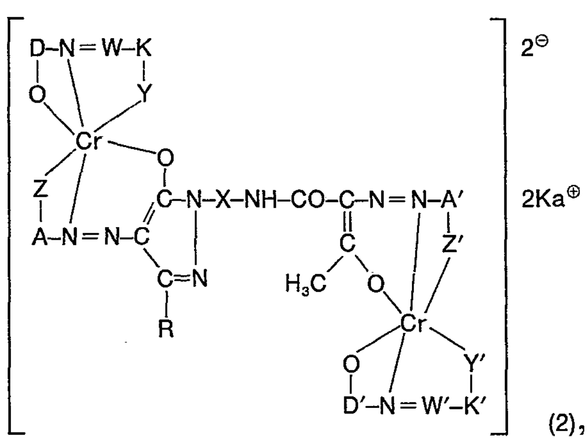

(2),

worin

A und A′ unabhängig voneinander je den Rest einer Diazokomponente der Benzol- oder Naphthalinreihe bedeutet, welcher die komplexbildende Gruppe Z bzw. Z′ in o-Stellung zur Azogruppe trägt,

X gegebenenfalls substituiertes Phenylen, Naphthylen oder $C_2$–$C_4$-Alkylen,

R $C_1$–$C_4$-Alkyl, COOQ oder $CONQQ_1$, wobei Q und $Q_1$ je Wasserstoff oder $C_1$–$C_4$-Alkyl darstellen,

Z und Z′ unabhängig voneinander je Sauerstoff oder eine –CO–O-Gruppe,

W und W′ unabhängig voneinander je ein Stickstoffatom oder eine CH-Gruppe,

Y und Y′ unabhängig voneinander je ein Sauerstoffatom oder eine NH-Gruppe, wobei Y bzw. Y′ ein Sauerstoffatom sein muss, wenn W bzw. W′ eine CH-Gruppe ist,

D und D′ unabhängig voneinander je den Rest einer Diazokomponente der Benzol- oder Naphthalinreihe, welche die komplexbildende Hydroxygruppe in o-Stellung zur Azogruppe trägt,

K und K′ unabhängig voneinander je den Rest einer in o-Stellung zur Hydroxy- bzw. NH-Gruppe kuppelnden Kupplungskomponente, falls W bzw. W′ ein Stickstoffatom bedeutet, oder, falls W bzw. W′ die CH-Gruppe bedeutet, den Rest eines o-Hydroxyaldehyds, und

$Ka^{\oplus}$ ein Kation bedeutet.

Geeignete Gruppen A, A′, X und R sind die bei den Disazofarbstoffen der Formel (1) aufgeführten Gruppen und unter diesen sind die dort als bevorzugt genannten auch bei den Metallkomplexfarbstoffen der Formel (2) besonders geeignet.

Die Reste D und D′ können verschieden oder vorzugsweise gleich sein. Sie leiten sich beispielsweise von den gleichen Aminen ab, die oben für die Reste A und A′ aufgeführt sind. Vorzugsweise stellen D und D′ je den Rest eines 1-Hydroxy-2-aminobenzols oder 1-Amino-2-hydroxynaphthalins dar, welches noch durch Nitro und/oder Sulfo substituiert ist.

Die Reste K und K′ können verschieden oder vorzugsweise gleich sein und leiten sich vor allem von folgenden Gruppen von Kupplungskomponenten ab:

Phenole, Phenylendiamine, Naphthole, Naphthylamine, Pyrazolone, Pyrazolimine, Pyridone, Acetessigsäureamide, insbesondere -anilide.

Diese können noch einen oder mehrere weitere Substituenten tragen, z.B. niedermolekulares Alkyl oder Alkoxy, Chlor, Brom, Nitro, Cyano, Sulfo oder Acylamino. Unter niedermolekularen Alkyl- oder Alkoxygruppen sind solche mit 1–6, vorzugsweise 1–2 C-Atomen zu verstehen und mit «Acylamino» werden niedrigmolekulare Alkanoylamino-, Alkylsulfonylamino- und Alkoxycarbonylaminoreste sowie Aroylamino- und Arylsulfonylaminoreste bezeichnet.

Bevorzugte Kupplungskomponenten K und K′ sind die folgenden: gegebenenfalls durch niedermolekulares Alkyl oder Alkoxy, Amino oder Acylamino substituierte in o-Stellung kuppelnde Phenole, wobei Acylamino die oben angegebene Bedeutung besitzt, Resorcin, m-Phenylendiamin, gegebenenfalls in 4-Stellung substituiert durch Sulfo, Chlor, Methyl oder Methoxy, Naphthole, die gegebenenfalls mit niedermolekularem Alkyl oder Alkoxy, Amino, Chlor, Acylamino oder Sulfo substituiert sind, wobei Acylamino dieselbe Bedeutung hat, die vorne angegeben ist, 5-Pyrazolone oder 5-Aminopyrazole, die in 1-Stellung einen gegebenenfalls mit Chlor, Nitro, niedrigmolekularen Alkyl- oder Alkoxygruppen sowie Sulfogruppen substituierten Phenyl- oder Naphthylrest besitzen und in 3-Stellung eine $C_1$–$C_4$-Alkylgruppe, insbesondere eine Methylgruppe, aufweisen, Naphthylamine, die gegebenenfalls mit Sulfo-, Sulfonamido- oder Sulfongruppen substituiert sind, Acetessigsäureanilide und Benzoylessigsäureanilide, die im Anilidkern gegebenenfalls mit Chlor, Brom, niedrigmolekularen Alkyl-, Alkoxy- oder Sulfogruppen substituiert sein können, oder 6-Hydroxy-3-cyano- oder 6-Hydroxy-3-carbonamido-4-alkyl-2-pyridone, die in 1-Stellung durch niedrigmolekulares, gegebenenfalls substituiertes Alkyl, z.B. Methyl, Isopropyl, β-Hydroxyethyl, β-Aminoethyl oder γ-Isopropoxypropyl oder durch Phenyl substituiert sind, und in 4-Stellung eine niedrigmolekulare Alkylgruppe, insbesondere Methyl, tragen können.

Beispiele solcher Kupplungskomponenten sind:
2-Naphthol, 1,3- oder 1,5-Dihydroxynaphthalin,
1-Naphthol, 1-Acetylamino-7-naphthol,
1-Propionylamino-7-naphthol, 1-Carbomethoxyamino-7-naphthol, 1-Carboethoxyamino-7-naphthol, 1-Carbopropoxyamino-7-naphthol, 6-Acetyl-2-naphthol, 2-Naphthol-3-, -4-, -5-, -6-, -7- oder -8-sulfosäure,
1-Naphthol-3-, -4- oder -5-sulfosäure,
4-Methyl-1-naphthol, 4-Methoxy-1-naphthol,
4-Acetyl-1-naphthol, 5,8-Dichlor-1-naphthol,
5-Chlor-1-naphthol, 2-Naphthylamin,
2-Naphthylamin-1-sulfosäure, 1-Naphthylamin-4- oder -5-sulfosäure, 2-Aminonaphthalin-6-sulfosäure, 1-Phenyl-3-methylpyrazol-5-on, 1-Phenyl-5-pyrazolon-3-carbonsäureamid, 1-(2′-, 3′- oder 4′-Methylphenyl)-3-methylpyrazol-5-on,
1-(2′,3′- oder 4′-Sulfophenyl)-3-methylpyrazol-5-on,
1-(2′-Chlor-5′-sulfophenyl)-3-methylpyrazol-5-on, 1-(2′- oder 4′-Methoxyphenyl)-3-methylpyrazol-5-on, 1-(2′-, 3′- oder 4′-Chlorphenyl)-3-methylpyrazol-5-on,
1-(2′-, 3′- oder 4′-Nitrophenyl)-3-methylpyrazol-5-on, 1-(2′,5′- oder 3′,4′-Dichlorphenyl)-3-methylpyrazol-5-on,
1-(2′,5′-Dichlor-4′-sulfophenyl)-3-methylpyrazol-5-on, 1-(2′-, 3′- oder 4′-Sulfophenyl)-3-methyl-5-aminopyrazol,
1-Phenyl-3-methyl-5-aminopyrazol,
1-(2′-Chlor-5′-sulfophenyl)-3-methyl-5-aminopyrazol, Acetoacetanilid, Acetoacetanilid-4-sulfosäure, Acetoacet-o-anisidid,
Acetoacet-o-toluidid, Acetoacet-onchloranilid, Acetoacet-m-xylidid, Tetralol,
4-Methylphenol, 3-Dialkylaminophenole,

besonders
3-Dimethylamino- und 3-Diethylaminophenol, 4-Butylphenol, vorzugsweise 4-tert.-Butylphenol, 4-Amylphenol, insbesondere 4-t-Amylphenol, 2-Isopropyl-4-methylphenol, 2- oder 3-Acetylamino-4-methylphenol, 2-Methoxycarbonyl-amino-4-methylphenol, 2-Ethoxycarbonylamino-4-methylphenol und 3,4-Dimethylphenol, Resorcin, 1-Methyl-3-cyano-4-ethyl-6-hydroxypyridon, 1-Methyl-3-cyano-4-methyl-6-hydroxypyridon, 1-Phenyl-3-carbonamido-4-methyl-6-hydroxypyridon oder m-Phenylendiamin.

Vorzugsweise stellen die Kupplungskomponenten K und K' ein gegebenenfalls durch Amino und/oder Sulfo substituiertes 1- oder 2-Naphthol, 1- oder 2-Naphthylamin, gegebenenfalls substituiert durch Sulfo, p-Alkyl($C_1$–$C_6$)-phenol, 1-Phenyl-3-methyl-5-pyrazolon oder Acetessigsäureanilid dar, wobei die Phenylgruppe in den beiden letztgenannten Verbindungen durch $C_1$–$C_4$-Alkyl, $C_1$–$C_4$-Alkoxy, Chlor sowie Sulfo substituiert sein kann.

Sofern W bzw. W' eine CH-Gruppe ist, stellt K bzw. K' den Rest eines o-Hydroxyaldehyds, vorzugsweise den Rest eines gegebenenfalls substituierten o-Hydroxybenzaldehyds oder o-Hydroxynaphthaldehyds, dar. Geeignete Aldehyde sind beispielsweise:
2-Hydroxy-1-naphthaldehyd, 1-Hydroxy-2-naphthaldehyd, 2-Hydroxy-benzaldehyd, 3- und 5-Methyl-2-hydroxybenzaldehyd, 3,5-Dimethyl-2-hydroxybenzaldehyd, 5-Butyl-2-hydroxybenzaldehyd, 5-Chlor- oder 5-Brom-2-hydroxybenzaldehyd, 3-Chlor-2-hydroxybenzaldehyd, 3,5-Dichlor-2-hydroxybenzaldehyd, 5-Sulfo-2-hydroxybenzaldehyd, 3-Methyl-5-chlor-2-hydroxybenzaldehyd, sowie die davon ableitbaren, mit Arylazo substituierten Aldehyde.

Die Reste D, D' und/oder K, K' können weitere Arylazogruppen tragen, so dass D–N = W–K und/oder D'–N = W'–K' auch Disazofarbstoffe bzw. Azomethin-azofarbstoffe, darstellen können. Als Farbstoffe der Formel D–N = N–K kommen vor allem die bekannten metallisierbaren Farbstoffe in Frage, beispielsweise die im «Colour Index» als mordant dyes aufgeführten.

$Ka^{\oplus}$ bedeutet vorzugsweise Lithium, Kalium oder vor allem Natrium. Ferner kann $Ka^{\oplus}$ ein Ammoniumkation oder das Ammoniumsalz eines organischen Amins sein.

Besonders geeignete erfindungsgemässe Farbstoffe sind diejenigen der Formel (3)

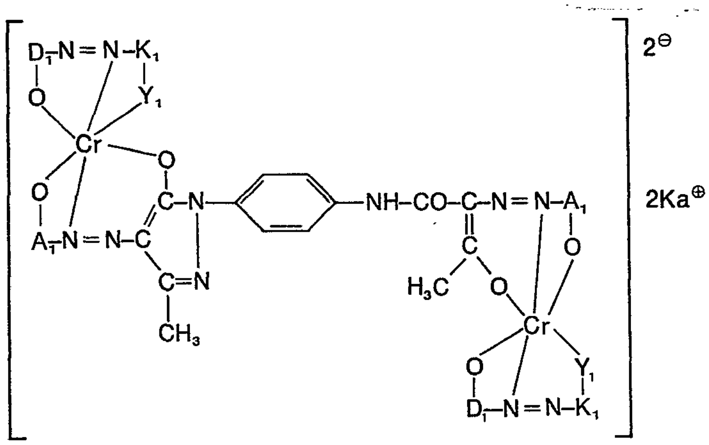

(3)

worin

$D_1$ den Rest eines 1-Hydroxy-2-aminobenzols oder 1-Amino-2-hydroxynaphthalins, welches noch durch Nitro und/oder Sulfo substituiert ist,

$K_1$ den Rest eines gegebenenfalls durch Sulfo und/oder Amino substituierten 1-Naphthols oder 2-Naphthols, 1- oder 2-Naphthylamins, gegebenenfalls substituiert durch Sulfo, p-Alkyl($C_1$–$C_6$)-phenols, 1-Phenyl-3-methyl-5-pyrazolons oder Acetessigsäureanilids, wobei die Phenylgruppe in den beiden letztgenannten Verbindungen durch $C_1$–$C_4$-Alkyl, $C_1$–$C_4$-Alkoxy, Chlor oder Sulfo substituiert sein kann,

$A_1$ den Rest eines 1-Hydroxy-2-aminobenzols, welcher durch Sulfo und/oder Nitro substituiert ist,

$Y_1$ Sauerstoff oder eine NH-Gruppe,

$Ka^{\oplus}$ ein Kation bedeutet.

Die metallfreien Disazofarbstoffe der Formel (1) werden nach an sich bekannten Methoden erhalten, z. B. indem man eine Verbindung der Formel (4)

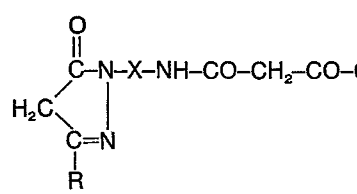

(4)

mit einer Diazoniumverbindung eines Amins der Formel $A–NH_2$ und/oder $A'–NH_2$ kuppelt. X, R, A und A' weisen dabei die oben angegebene Bedeutung auf.

Die neuen Zwischenprodukte der Formel (4)

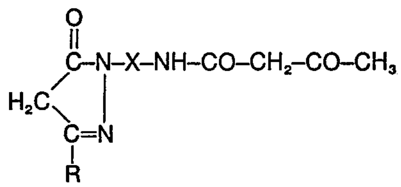

(4)

worin

X gegebenenfalls substituiertes Phenylen, Naphthylen oder $C_2$–$C_4$-Alkylen und

R $C_1$–$C_4$-Alkyl, COO–Q oder $CONQQ_1$ bedeutet, wobei Q und $Q_1$ je Wasserstoff oder $C_1$–$C_4$-Akyl darstellen, stellen einen weiteren Gegenstand der vorliegenden Erfindung dar. Sie werden z.B. erhalten, indem man ein Pyrazolon der Formel (13)

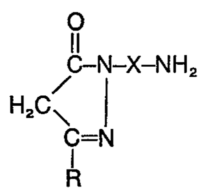

(13)

mit Diketen umsetzt. Vorzugsweise setzt man 1-(4′-aminophenyl)-3-methyl-5-pyrazolon ein.

Zur Herstellung von metallfreien Disazofarbstoffen der Formel (1), bei denen A und A′ nicht identisch sind, kuppelt man eine Verbindung der Formel (4) mit einem Gemisch der Diazoniumverbindungen von Aminen der Formel $A–NH_2$ und $A′–NH_2$. In diesem Falle erhält man Verbindungen der Formel (1), bei denen A und A′ nicht identisch sind, im Gemisch mit Verbindungen, welche zwei Reste A bzw. zwei Reste A′ enthalten.

Die reinen Verbindungen der Formel (1), bei denen A und A′ nicht identisch sind erhält man z.B. indem man ein Acetylaminopyrazolon der Formel (14)

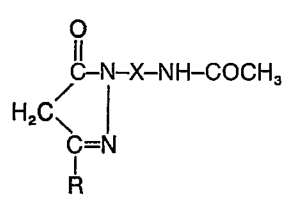

(14)

worin

X gegebenenfalls substituiertes Phenylen, Naphthylen oder $C_2$–$C_4$-Alkylen und

R $C_1$–$C_4$-Alkyl, COO–Q oder $CONQQ_1$ bedeutet, wobei Q und $Q_1$ je Wasserstoff oder $C_1$–$C_4$-Alkyl darstellen,

mit einer Diazoniumverbindung eines Amins der Formel $A–NH_2$ kuppelt, anschliessend verseift und danach mit Diketen umsetzt und das erhaltene Reaktionsprodukt mit einer Diazoniumverbindung eines Amins der Formel $A′–NH_2$ kuppelt.

Die Metallkomplexfarbstoffe, enthaltend mindestens einen Disazofarbstoff der Formel (1), werden z.B. hergestellt, indem man einen Disazofarbstoff der Formel (1), mit einem metallabgebenden, insbesondere einem kobalt- oder chromabgebenden Mittel umsetzt. Die Metallisierung wird nach den üblichen Verfahren durchgeführt, z.B. mit Kobaltsulfat oder -acetat oder Chromsalicylat in schwach alkalischer Lösung.

Chromierungen können ausserdem mit Chromaten in Gegenwart eines Reduktionsmittels durchgeführt werden. Die Disazofarbstoffe werden mit den Metallisierungsmitteln im Verhältnis 1 : 1 oder 1 : 2 umgesetzt, wobei man unter den für diese Metallisierungen üblichen Bedingungen arbeitet. Die Metallisierung kann in wässerigen, organischwässerigen oder in rein organischen Lösungsmitteln, wie Alkoholen oder Ketonen durchgeführt werden, gegebenenfalls unter Zusatz von lösungsvermittelnden oder die Metallisierung beschleunigenden Substanzen, wie z.B. Komplexbildnern.

Im Fall der Chromkomplexe kann man auch den Disazofarbstoff der Formel (1) mit einem 1 : 1-Chromkomplexfarbstoff zum 1 : 2-Chromkomplexfarbstoff umsetzen.

Die Chromkomplexfarbstoffe der Formel (2)

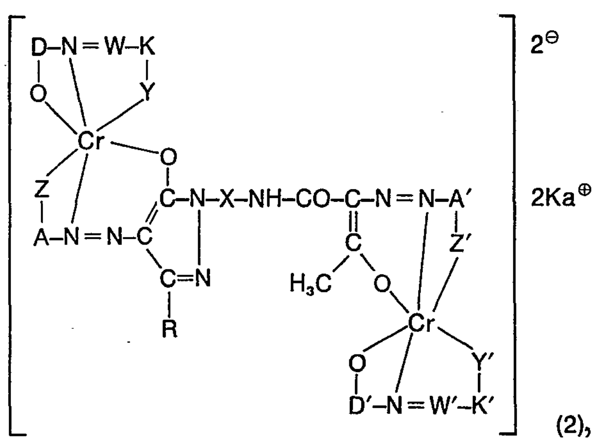

(2),

worin

A und A′ unabhängig voneinander je den Rest einer Diazokomponente der Benzol- oder Naphthalinreihe bedeutet, welcher die komplexbildende Gruppe Z bzw. Z′ in o-Stellung zur Azogruppe trägt,

X gegebenenfalls substituiertes Phenylen, Naphthylen oder $C_2$–$C_4$-Alkylen,

R $C_1$–$C_4$-Alkyl, COOQ oder $CONQQ_1$, wobei Q und $Q_1$ je Wasserstoff oder $C_1$–$C_4$-Alkyl darstellen,

Z und Z′ unabhängig voneinander je Sauerstoff oder eine –CO–O-Gruppe,

W und W′ unabhängig voneinander je ein Stickstoffatom oder eine CH-Gruppe,

Y und Y′ unabhängig voneinander je ein Sauerstoffatom oder eine NH-Gruppe, wobei Y bzw. Y′ ein Sauerstoffatom sein muss, wenn W bzw. W′ eine CH-Gruppe ist,

D und D′ unabhängig voneinander je den Rest einer Diazokomponente der Benzol- oder Naphthalinreihe, welche die komplexbildende Hydroxygruppe in o-Stellung zur Azogruppe trägt,

K und K′ unabhängig voneinander je den Rest einer in o-Stellung zur Hydroxy- bzw. NH-Gruppe kuppelnden Kupplungskomponente, falls W bzw.

W′ ein Stickstoffatom bedeutet, oder, falls W bzw. W′ die CH-Gruppe bedeutet, den Rest eines o-Hydroxyaldehyds, und

Ka$^{\oplus}$ ein Kation

bedeutet, werden z.B. hergestellt, indem man einen Disazofarbstoff der Formel (1)

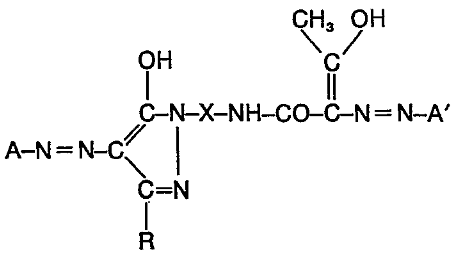
(1),

in Gegenwart eines chromabgebenden Mittels im Verhältnis von ca. 1 : 2 mit einem Azo- bzw. Azomethinfarbstoff der Formel (5) und/oder (6)

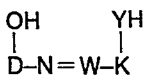
(5)

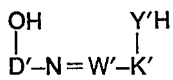
(6)

umsetzt, worin D, W, K, Y, D′, W′, Y′ und K′ die oben angegebene Bedeutung aufweisen. In diesem Falle erhält man die Chromkomplexfarbstoffe der oben angegebenen Formel (2) im Gemisch mit weiteren Chromkomplexfarbstoffen.

Vorzugsweise stellt man die Chromkomplexfarbstoffe der oben angegebenen Formel (2) jedoch her, indem man einen Disazofarbstoff der Formel (1)

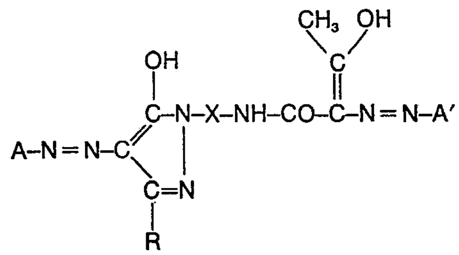
(1),

im Verhältnis von ca. 1 : 2 mit einem Chromkomplexfarbstoff der Formel (8) und/oder (9)

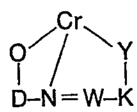
(8)

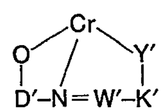
(9)

umsetzt.

Die bevorzugten Chromkomplexfarbstoffe der Formel (3)

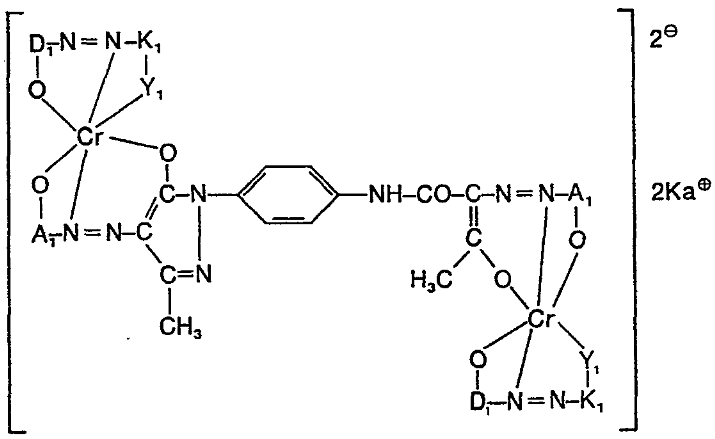
(3)

worin

$D_1$ den Rest eines 1-Hydroxy-2-aminobenzols oder 1-Amino-2-hydroxy-naphthalins, welches noch durch Nitro und/oder Sulfo substituiert ist,

$K_1$ den Rest eines gegebenenfalls durch Sulfo und/oder Amino substituierten 1-Naphthols oder 2-Naphthols, eines in p-Stellung durch $C_1$–$C_6$-Alkyl substituierten Phenols, eines gegebenenfalls durch Sulfo substituierten 1- oder 2-Naphthylamins oder den Rest eines, 1-Phenyl-3-methyl-5-pyrazolons oder Acetessigsäureanilids, wobei die Phenylgruppe in den beiden letztgenannten Verbindungen durch $C_1$–$C_4$-Alkyl, $C_1$–$C_4$-Alkoxy, Chlor oder Sulfo substituiert sein kann,

$X_1$ Sauerstoff oder eine NH-Gruppe,

Ka$^{\oplus}$ ein Kation und

$A_1$ den Rest eines 1-Hydroxy-2-aminobenzols bedeutet, welcher durch Sulfo und/oder Nitro substituiert ist,

werden vorzugsweise hergestellt, indem man einen Disazofarbstoff der Formel (11)

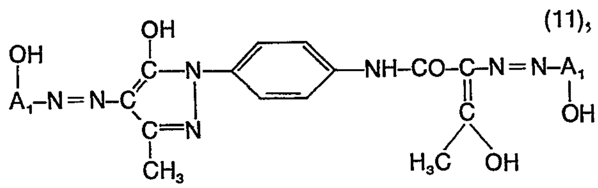
(11),

im Verhältnis von ca. 1 : 2 mit einem 1 : 1-Chromkomplexfarbstoff der Formel (12)

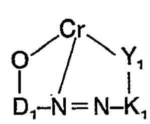
(12)

umsetzt, worin $D_1$, $K_1$ und $Y_1$ die angegebene Bedeutung aufweisen.

Die metallfreien Disazofarbstoffe der Formel (1) eignen sich zum Färben von Wolle, indem man die Färbung auf der Faser mittels metallabgebenden Mitteln, vorzugsweise chrom- oder kobaltabgebenden Mitteln nachbehandelt.

Die nach den obigen Verfahren erhältlichen, neuen Metallkomplexfarbstoffe werden vorteilhaft in Form ihrer Salze, insbesondere Alkali-, wie Lithium-, Kalium-, vor allem aber Natriumsalze, oder auch Ammoniumsalze isoliert. Sie eignen sich zum Färben der verschiedenen natürlichen oder synthetischen Polyamidmaterialien, Polyurethane, insbesondere aber zum Färben von Wolle oder vor allem Leder.

Die neuen Farbstoffe sind farbstark und decken gut. Sie haben ein gutes Ziehvermögen bei gleichzeitig guten Echtheiten wie Wasch-, Wasser-, Schweiss-, Reib-, Diffusions-, Licht-, Säure- und Alkaliechtheit sowie Säure- und Alkalistabilität. Besonders Erwähnung verdient das gute Aufbauvermögen auf diversen Ledersorten, sowohl auf nur mit Chromsalzen gegerbtem Leder wie auch auf mit vegetabilen oder synthetischen Gerbstoffen nachgegerbtem Leder. Man erhält kräftige orangerote bis braune sowie schwarze Nuancen.

Von den Verbindungen gemäss GB-A-1 399 296 unterscheiden sich die erfindungsgemäss beanspruchten Disazofarbstoffe durch die Gruppe $-NH-CO-C=CH(CH_3, OH)-$, welche anstelle einer direkten Bindung steht. In der GB-A-1 399 296 gibt es jedoch keinerlei Hinweis für eine solche Abwandlung und der Fachmann wird die vorteilhaften Eigenschaften der in dieser Patentschrift offenbarten Farbstoffe zweifellos mit der dort zwingend vorgeschriebenen Struktur der Farbstoffe in Verbindung bringen. Für den Fachmann bestand also keinerlei Veranlassung die Farbstoffe der GB-A entsprechend abzuwandeln.

Ausserdem stellt die Gruppe K in der GB-A eine Kupplungskomponente dar. Bei den erfindungsgemässen Disazofarbstoffen stellt die Gruppe A′ jedoch eine Diazokomponente dar. Die Farbstoffe der GB-A werden also erhalten, indem man eine Diazokomponente auf ein Aminoarylenpyrazolon kuppelt, das erhaltene Produkt diazotiert und auf eine weitere Kupplungskomponente kuppelt. Die erfindungsgemässen Farbstoffe werden dagegen erhalten, indem man zwei Mol einer Diazokomponente (oder zweier verschiedener Diazokomponenten) auf ein Mol Acetessig-amido-arylpyrazolon kuppelt.

Die FR-A-1 435 151 beschreibt zwar Disazofarbstoffe, die durch Kuppeln von zwei Diazoverbindungen auf eine Kupplungskomponente hergestellt werden. Diese Kupplungskomponente ist jedoch völlig verschieden von der in den erfindungsgemässen Disazofarbstoffen verwendeten. Die Kupplungskomponente der FR-A ist eine Naphtholmonosulfonsäure, welche einen Acetoacetylaminorest aufweist. Die Kupplungen erfolgen an der Methylengruppe des Acetoacetylaminorestes und an der Naphtholsulfosäure.

Die Kupplungskomponente der erfindungsgemässen Farbstoffe enthält zwar ebenfalls eine Acetoacetylaminogruppe. Diese ist über eine Gruppe X, wobei X Naphthylen sein kann, an einen Pyrazolonrest gebunden. Die Kupplungen erfolgen an der Methylengruppe des Acetoacetylaminorestes und am Pyrazolonrest, nicht jedoch am Naphthylenrest.

In der FR-A gibt es keinen Hinweis, dass man anstelle einer Naphtholsulfosäure einen Naphthylenrest, welcher an ein Pyrazolon gebunden ist, verwenden kann. Auch aus dieser FR-A sind also die erfindungsgemässen Farbstoffe nicht ableitbar.

In den nachfolgenden Beispielen bedeuten die Teile, sofern nichts anderes angegeben wird, Gewichtsteile und die Prozente Gewichtsprozente. Die Temperaturen sind in Grad Celsius angegeben.

Beispiel 1

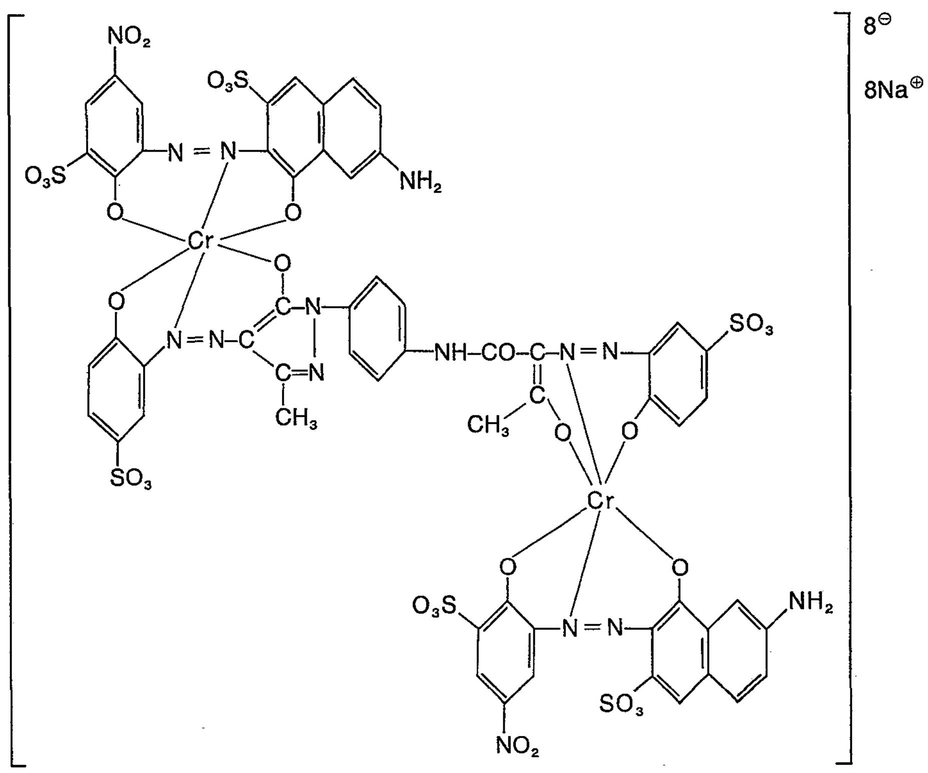

In 1000 Volumenteilen Wasser suspendiert man 53,4 Teile der komplexen Chromverbindung vom Typus 1 Atom Chrom : 1 Molekül Farbstoff, welche 5,2 Teile Chrom und 48,4 Teile Monoazofarbstoff aus diazotierter 4-Nitro-2-amino-1-hydroxybenzol-6-sulfonsäure und 2-Amino-8-hydroxynaphthalin-6-sulfonsäure enthält, mit 33,7 Teilen des Disazofarbstoffs, erhalten durch alkalische Kupplung von 2 Molekülen diazotierter 2-Amino-1-hydroxybenzol-4-sulfonsäure auf 1 Molekül 1-(4'-Acetoacetylaminophenyl)-3-methyl-5-pyrazolon. Man erhitzt das Gemisch auf 80–85° und erhöht gleichzeitig den pH-Wert des Reaktionsgemisches auf 7 bis 7,5 durch Zugabe von 5n Natronlauge und hält so lange bei dieser Temperatur und konstantem pH-Wert durch weitere Zugabe von 5n Natronlauge, bis die Ausgangsprodukte verschwunden sind. Der erhaltene, neue, chromhaltige Farbstoff wird anschliessend durch Zugabe von Natriumchlorid ausgefällt. Man filtriert ihn ab und trocknet ihn. Nach dem Trocknen stellt er ein dunkles Pulver dar, das sich in Wasser löst und Leder in braunen Tönen färbt.

Das im obigen Beispiel eingesetzte 1-(4'-Acetoacetylaminophenyl)-3-methyl-5-pyrazolon wird z.B. erhalten, indem man 1-(4'-Aminophenyl)-3-methyl-5-pyrazolon in Wasser als Natronsalz löst und bei 50–55° mit Diketen bis zum Verschwinden des Ausgangsprodukts umsetzt.

Beispiel 2

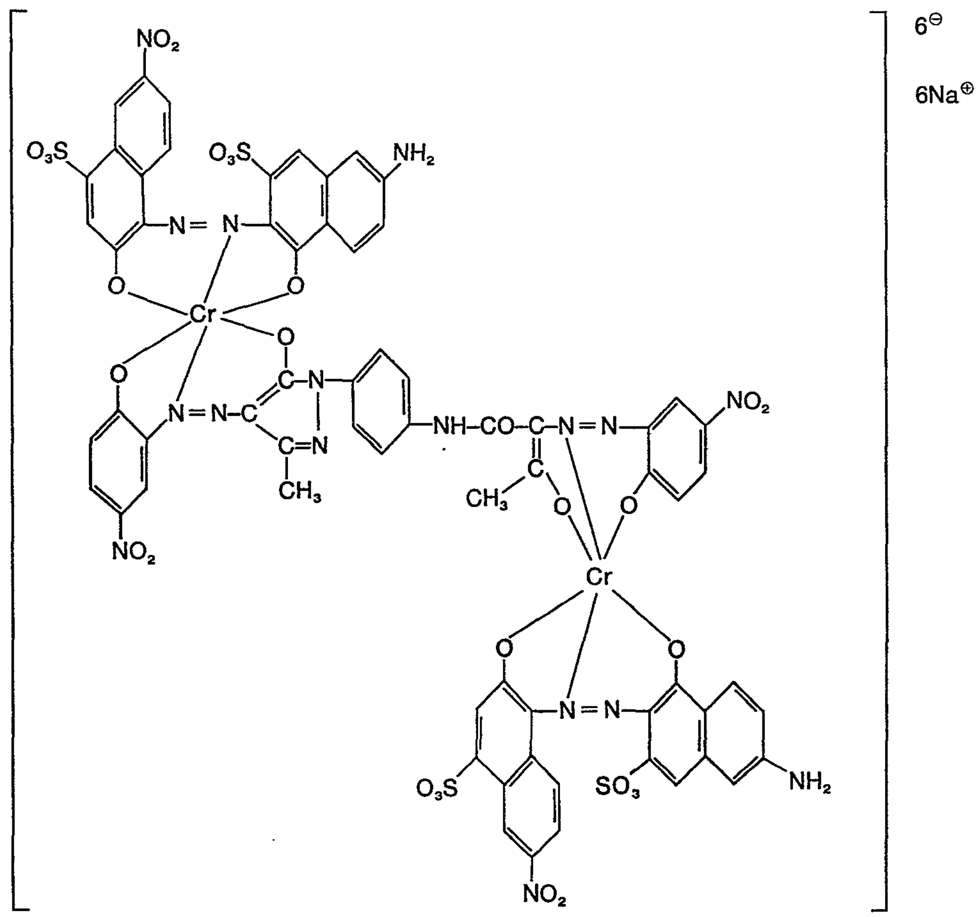

In 750 Volumenteilen Ethylenglykol suspendiert man 58,4 Teile der komplexen Chromverbindung vom Typus 1 Chrom : 1 Molekül Farbstoff, welche 5,2 Teile Chrom und 53,4 Teile Monoazofarbstoff aus diazotierter 6-Nitro-1-amino-2-hydroxynaphthalin-4-sulfonsäure und 2-Amino-5-hydroxynaphthalin-7-sulfonsäure enthält, mit 30,1 Teilen des Disazofarbstoffs, erhalten durch alkalische Kupplung von 2 Molekülen diazotiertem 4-Nitro-2-amino-1-hydroxybenzol auf 1 Molekül 1-(4'-Acetoacetylaminophenyl)-3-methyl-5-pyrazolon. Man erhitzt das Gemisch auf 80 bis 85° und erhöht gleichzeitig den pH-Wert des Reaktionsgemisches auf 7 bis 7,5 durch Zugabe von 5n Natronlauge und hält so lange bei dieser Temperatur und konstantem pH-Wert durch weitere Zugabe von 5n Natronlauge, bis die Ausgangsprodukte verschwunden sind. Der erhaltene, neue chromhaltige Farbstoff wird durch Zugabe gesättigter Natriumchloridlösung ausgefällt, abfiltriert und getrocknet. Er stellt ein dunkles Pulver dar, das sich in Wasser löst und Leder in dunkelbraunen Tönen und guten Echtheiten färbt.

Beispiel 3

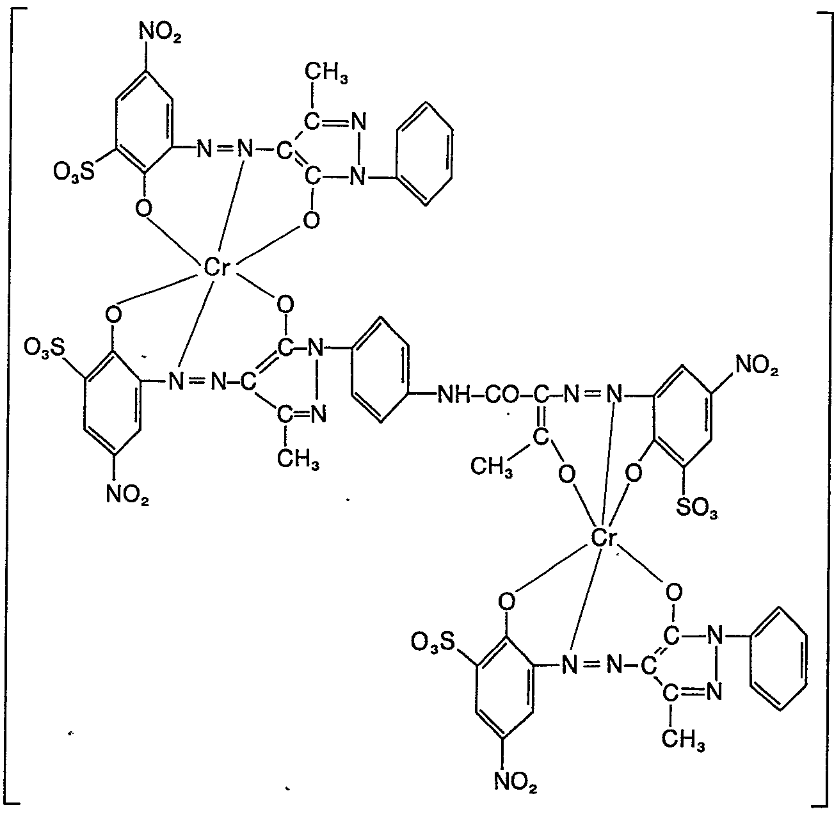

$6^{\ominus}$

$6Na^{\oplus}$

In 1000 Volumenteilen Wasser suspendiert man 46,9 Teile der komplexen Chromverbindung vom Typus 1 Atom Chrom : 1 Molekül Farbstoff, welche 5,2 Teile Chrom und 41,9 Teile Monoazofarbstoff aus diazotierter 4-Nitro-2-amino-1-hydroxybenzol-6-sulfonsäure und 1-Phenyl-3-methyl-5-pyrazolon enthält, mit 38,1 Teilen des Disazofarbstoffs, erhalten durch alkalische Kupplung von 2 Molekülen diazotierter 4-Nitro-2-amino-1-hydroxybenzol-6-sulfonsäure auf 1 Molekül 1-(4'-Acetoacetylamino-phenyl)-3-methyl-5-pyrazolon. Man erhitzt das Reaktionsgemisch auf 80–85° und erhöht gleichzeitig den pH-Wert auf 7 bis 7,5 durch Zugabe von 5n Natronlauge und hält es so lange bei dieser Temperatur und konstantem pH-Wert durch Zugabe von 5n Natronlauge, bis die Ausgangsprodukte verschwunden sind. Der neue, chromhaltige Farbstoff wird durch Zugabe von Natriumchlorid ausgefällt. Hierauf filtriert man ihn ab und wäscht ihn aus mit verdünnter Natriumchloridlösung. Nach dem Trocknen stellt er ein dunkles Pulver dar, das sich in Wasser mit oranger Farbe löst und Leder in orangen Tönen färbt.

Farbstoffe mit ähnlichen Eigenschaften erhält man, wenn man den 1 : 1 Chromkomplex der in Kolonne I genannten Verbindung im Verhältnis 2 : 1 mit dem in Kolonne II aufgeführten Disazofarbstoff umsetzt. Die Farbstoffe färben Leder in den in Kolonne III angegebenen Tönen mit guten Echtheiten.

Tabelle

| No. | I | II | III |
|---|---|---|---|
| 1 | 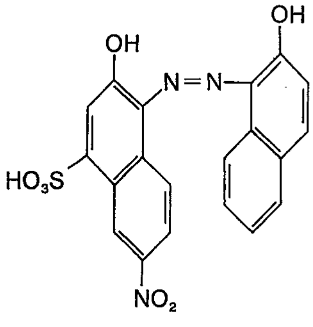 | 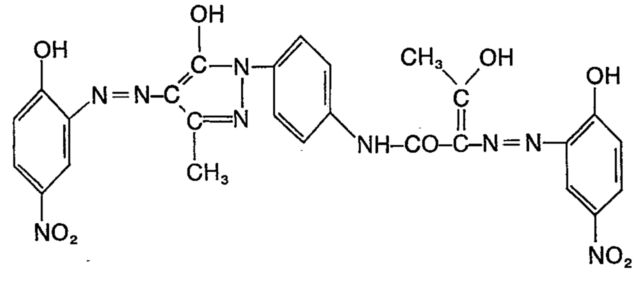 | Braun |

Tabelle (Fortsetzung)

| No. | I | II | III |
|---|---|---|---|
| 2 | 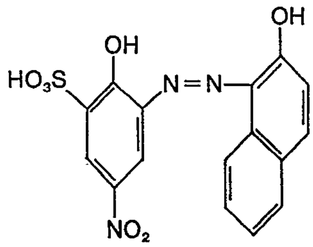 | 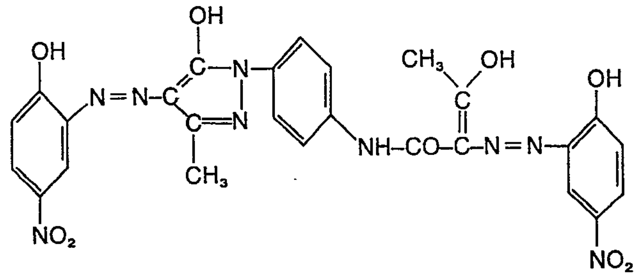 | Braun |
| 3 | 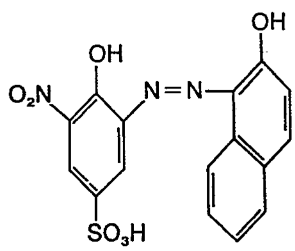 | do | Braun |
| 4 | 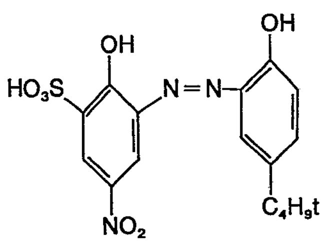 | do | Braun |
| 5 | 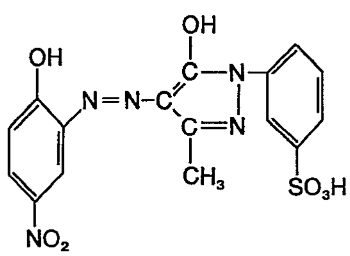 | do | Orange |
| 6 | 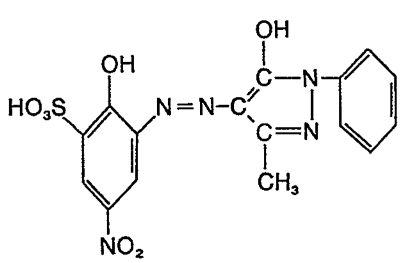 | do | Orange |

Tabelle (Fortsetzung)

| No. | I | II | III |
|---|---|---|---|
| 7 | 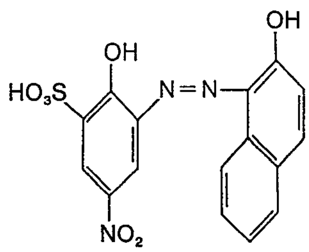 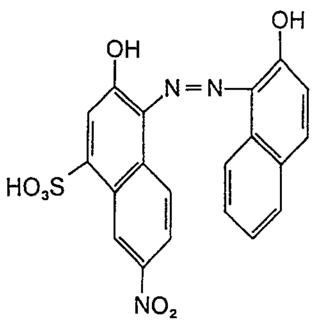 | 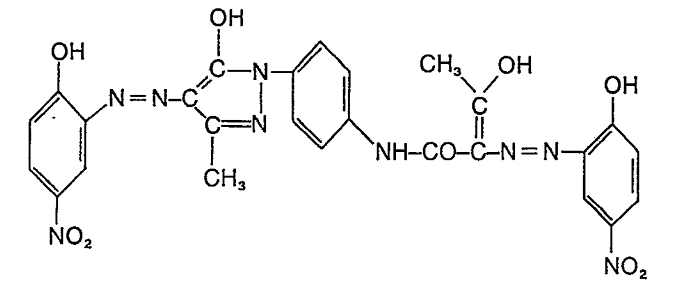 | Braun |
| 8 | 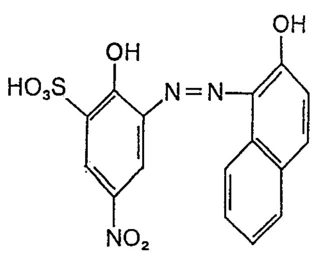 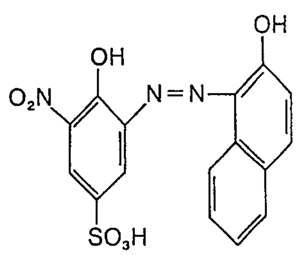 | 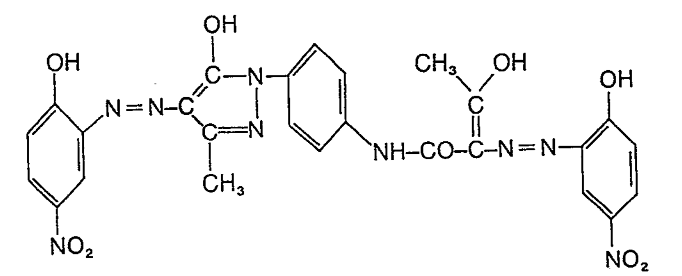 | Braun |
| 9 | 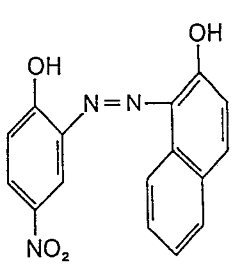 | 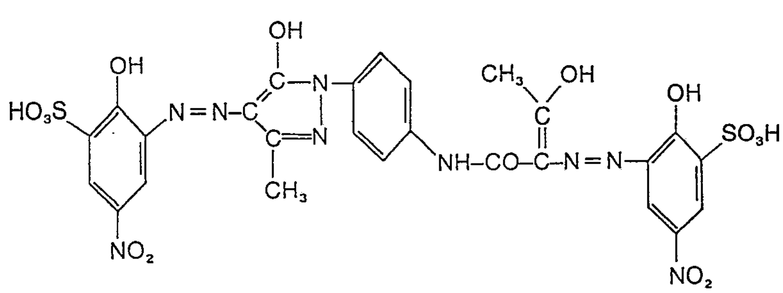 | Braun |

Tabelle (Fortsetzung)

| No. | I | II | III |
|---|---|---|---|
| 10 | 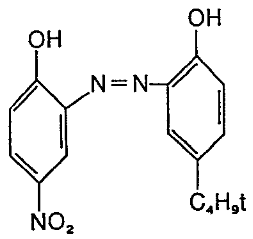 | 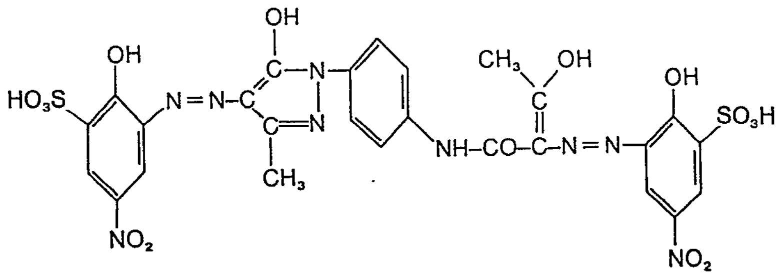 | Braun |
| 11 | 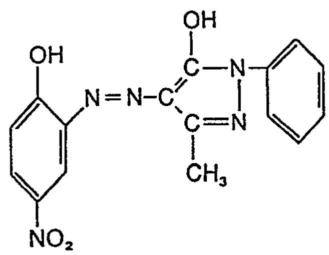 | do | Orange |
| 12 | 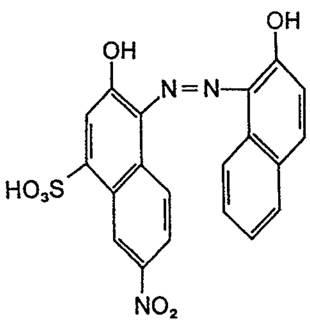 | 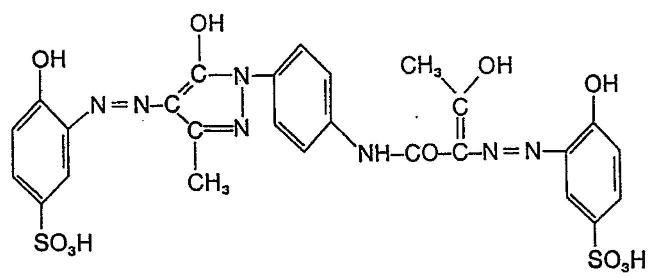 | Blaustichigbraun |
| 13 | 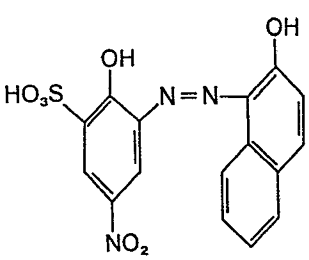 | 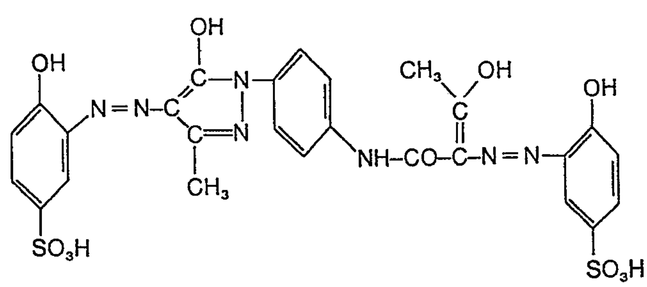 | Rotstichigbraun |
| 14 | 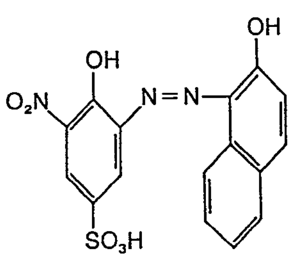 | do | Rotstichigbraun |

Tabelle (Fortsetzung)

| No. | I | II | III |
|---|---|---|---|
| 15 | 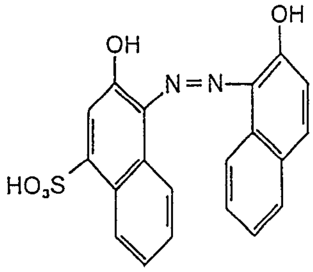 | 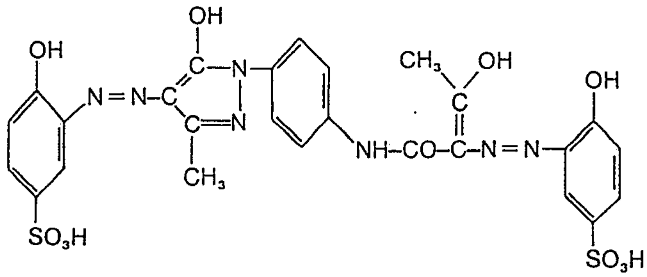 | Grün-stichig-braun |
| 16 | 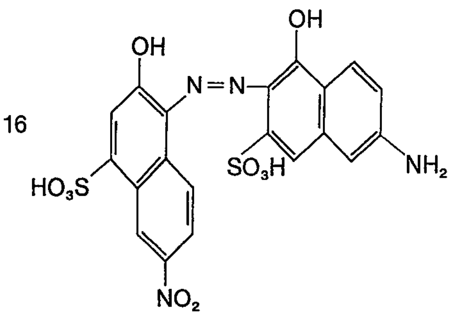 | do | Grau-schwarz |
| 17 | 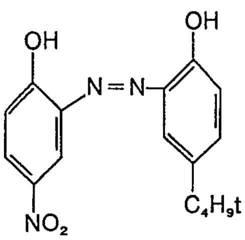 | do | Rot-braun |
| 18 | 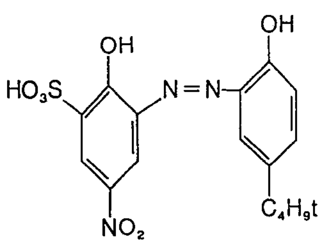 | do | Orange-stichig-braun |
| 19 | 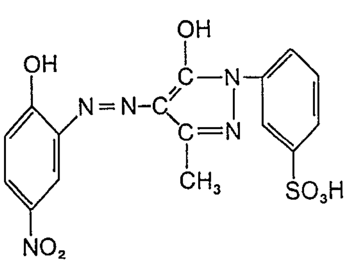 | do | Orange |

Tabelle (Fortsetzung)

| No. | I | II | III |
|---|---|---|---|
| 20 | 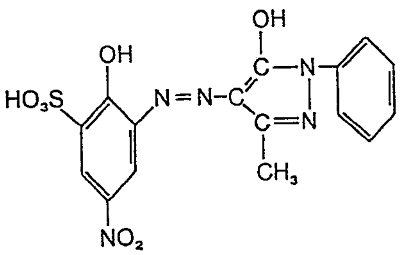 | 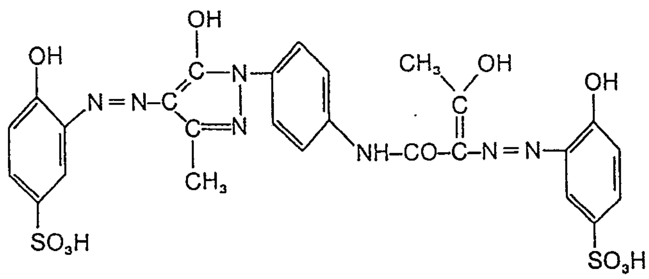 | Orange |
| 21 | 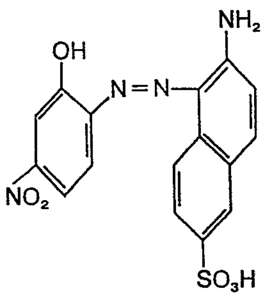 | do | Olive-braun |
| 22 | 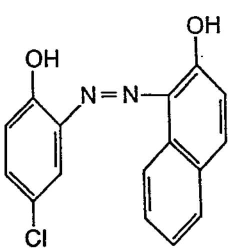 | 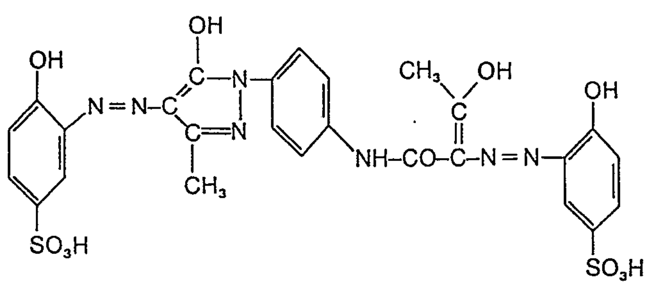 | Violett-stichig-braun |
| 23 | 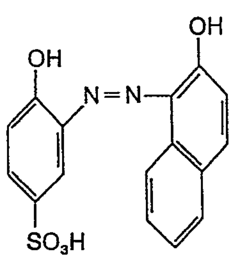 | do | Rot-braun |
| 24 | 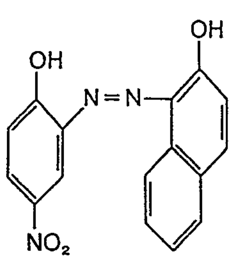 | do | Rot-stichig-braun |

Tabelle (Fortsetzung)

| No. | I | II | III |
|---|---|---|---|
| 25 | 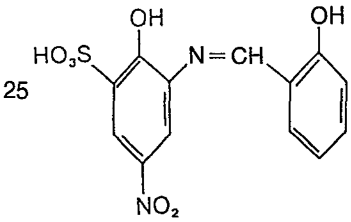 | 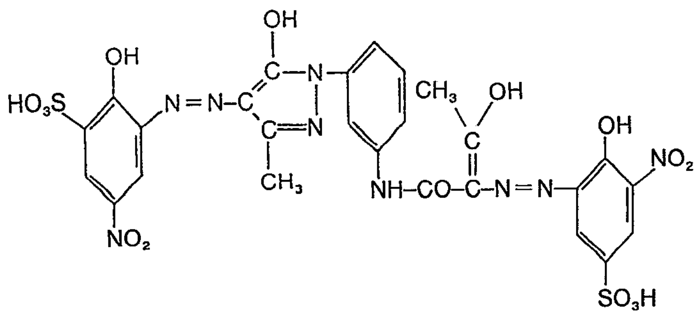 | gelbstichig orange |
| 26 | do | 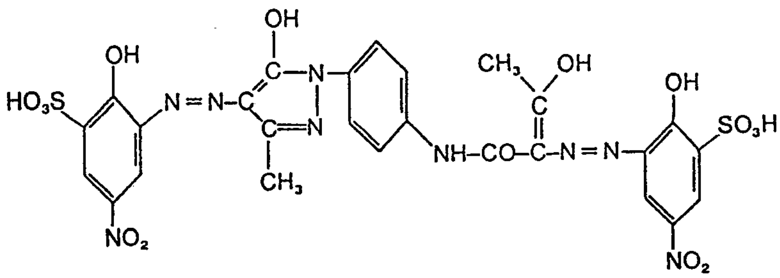 | gelbstichig orange |
| 27 | 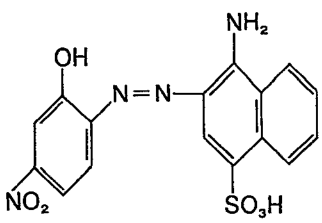 ca. 1:1 Gemisch 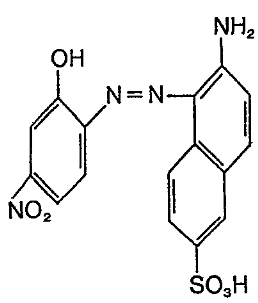 | 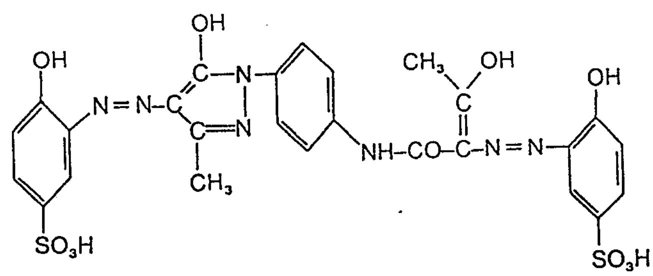 | Olivebraun |

Beispiel 4

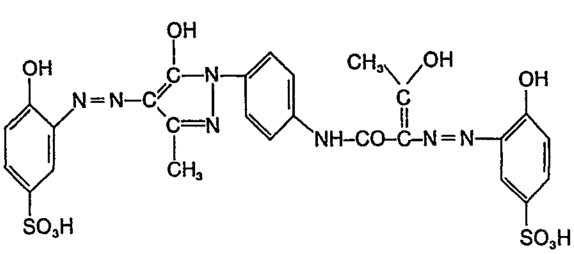

67,3 Teile des Disazofarbstoffes, welcher durch alkalische Kupplung von 2 Molekülen diazotierter 2-Amino-1-hydroxybenzol-4-sulfonsäure auf 1 Molekül 1-(4'-Acetoacetylaminophenyl)-3-methyl-5-pyrazolon erhalten wird, werden in 800 Volumenteilen Wasser suspendiert. Durch Zugabe von 5n Natronlauge stellt man den pH-Wert der Suspension auf ca. 8 unter gleichzeitiger Erhöhung der Temperatur auf ca. 90°. Hierauf gibt man eine ebenfalls mit 5n Natronlauge auf pH 8,5 gestellte

Mischung von 51,5 Teilen Kobaltsulfatheptahydrat und 22,5 Teilen Weinsäure in 200 Volumenteilen Wasser zu und hält das Gemisch bei 90–95° bis der Ausgangsfarbstoff verschwunden ist. Der gebildete Kobaltkomplex wird durch Zugabe von Natriumchlorid ausgefällt, abfiltriert und mit verdünnter Natriumchloridlösung ausgewaschen und getrocknet. Nach dem Trocknen stellt er ein dunkles Pulver dar, das sich in Wasser löst und Leder in braunstichigorangen Tönen mit guten Echtheiten färbt.

Färbevorschriften für Leder

100 Teile Bekleidungsveloursleder (Trockengewicht) werden bei 50° in einer Lösung von 1000 Volumenteilen Wasser und 2 Teilen Ammoniak 24%-ig während 2 Stunden aufgewalkt und anschliessend bei 60° in einer Lösung von 1000 Volumenteilen Wasser, 2 Teilen Ammoniak 24%-ig und 2 Teilen Farbstoff aus Beispiel 1 während einer Stunde gefärbt. Hierauf gibt man eine Lösung von 40 Volumenteilen Wasser und 4 Teilen Ameisensäure 85%-ig zu und färbt noch weitere 30 Minuten. Dann werden die Leder gut gespült und gegebenenfalls noch mit 2 Teilen eines Dicyandiamidformaldehydkondensationsproduktes während 30 Minuten bei 50° behandelt.

In gleicher Weise lassen sich andere Velourleder sowie Handschuhleder färben.

Die so erhaltenen braunen Färbungen zeichnen sich durch allgemein gute Echtheiten und sehr gutes Deckvermögen aus.

**Patentansprüche**

1. Metallisierbare Disazofarbstoffe der Formel (1)

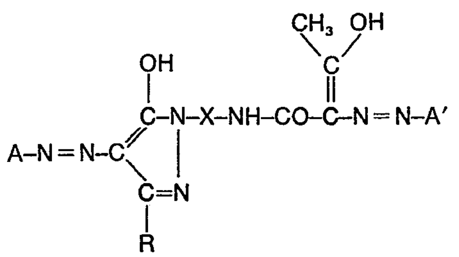

(1),

worin

A und A' unabhängig voneinander je den Rest einer Diazokomponente der Benzol- oder Naphthalinreihe bedeuten, wobei mindestens eine der Gruppen A oder A' in o-Stellung zur Azogruppe eine metallisierbare Hydroxy- oder Carboxygruppe trägt,

X gegebenenfalls substituiertes Phenylen, Naphthylen oder $C_2$–$C_4$-Alkylen und

R $C_1$–$C_4$-Alkyl, COO–Q oder CONQQ$_1$ bedeutet, wobei Q und Q$_1$ je Wasserstoff oder $C_1$–$C_4$-Alkyl darstellen.

2. Disazofarbstoffe gemäss Anspruch 1, worin X gegebenenfalls substituiertes Phenylen und R Methyl bedeutet und A und A' die im Anspruch 1 angegebene Bedeutung aufweisen.

3. Disazofarbstoffe gemäss Anspruch 2, worin X unsubstituiertes Phenylen bedeutet.

4. Disazofarbstoffe gemäss Ansprüchen 1 bis 3, worin A und A' jeweils den Rest eines 1-Hydroxy-2-aminobenzols bedeuten, der durch Chlor, Nitro und/oder Sulfo substituiert ist, insbesondere den Rest eines 1-Hydroxy-2-amino-nitrobenzols, welcher noch eine Sulfogruppe trägt.

5. Disazofarbstoffe gemäss Ansprüchen 1–4, worin A und A' das gleiche bedeuten.

6. Metallkomplexfarbstoffe, enthaltend mindestens einen Disazofarbstoff der Formel

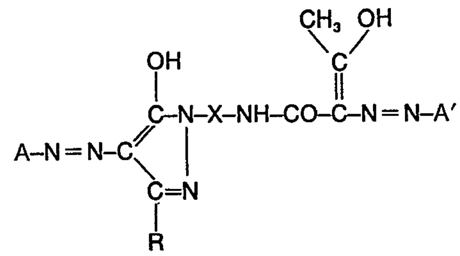

(1),

worin

A und A' unabhängig voneinander je den Rest einer Diazokomponente der Benzol- oder Naphthalinreihe bedeuten, wobei mindestens eine der Gruppen A oder A' in o-Stellung zur Azogruppe eine metallisierbare Hydroxy- oder Carboxygruppe trägt,

X gegebenenfalls substituiertes Phenylen, Naphthylen oder $C_2$–$C_4$-Alkylen und

R $C_1$–$C_4$-Alkyl, COO–Q oder CONQQ$_1$ bedeutet, wobei Q und Q$_1$ je Wasserstoff oder $C_1$–$C_4$-Alkyl darstellen.

7. Chromkomplexfarbstoffe gemäss Anspruch 6 der Formel (2)

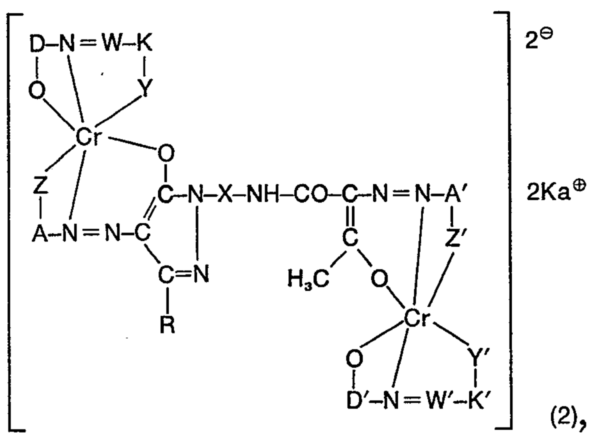

(2),

worin

A und A' unabhängig voneinander je den Rest einer Diazokomponente der Benzol- oder Naphthalinreihe bedeutet, welcher die komplexbildende Gruppe Z bzw. Z' in o-Stellung zur Azogruppe trägt,

X gegebenenfalls substituiertes Phenylen, Naphthylen oder $C_2$–$C_4$-Alkylen,

R $C_1$–$C_4$-Alkyl, COOQ oder CONQQ$_1$, wobei Q und Q$_1$ je Wasserstoff oder $C_1$–$C_4$-Alkyl darstellen,

Z und Z' unabhängig voneinander je Sauerstoff oder eine –CO–O-Gruppe,

W und W' unabhängig voneinander je ein Stickstoffatom oder eine CH-Gruppe,

Y und Y′ unabhängig voneinander je ein Sauerstoffatom oder eine NH-Gruppe, wobei Y bzw. Y′ ein Sauerstoffatom sein muss, wenn W bzw. W′ eine CH-Gruppe ist,

D und D′ unabhängig voneinander je den Rest einer Diazokomponente der Benzol- oder Naphthalinreihe, welche die komplexbildende Hydroxygruppe in o-Stellung zur Azogruppe trägt,

K und K′ unabhängig voneinander je den Rest einer in o-Stellung zur Hydroxy- bzw. NH-Gruppe kuppelnden Kupplungskomponente, falls W bzw. W′ ein Stickstoffatom bedeutet, oder, falls W bzw. W′ die CH-Gruppe bedeutet, den Rest eines o-Hydroxyaldehyds, und

$Ka^{\oplus}$ ein Kation bedeutet.

8. Metallkomplexfarbstoffe gemäss Ansprüchen 6 oder 7, worin A und A′ jeweils den Rest eines 1-Hydroxy-2-aminobenzols bedeuten, der durch Chlor, Nitro und/oder Sulfo substituiert ist, insbesondere den Rest eines 1-Hydroxy-2-amino-nitrobenzols, welcher gegebenenfalls noch eine Sulfogruppe trägt.

9. Metallkomplexfarbstoffe gemäss Ansprüchen 6–8, worin A und A′ das gleiche bedeuten.

10. Metallkomplexfarbstoffe gemäss Ansprüchen 6–9, worin X gegebenenfalls substituiertes Phenylen und R Methyl bedeutet.

11. Metallkomplexfarbstoffe gemäss Anspruch 10, worin X unsubstituiertes Phenylen bedeutet.

12. Chromkomplexfarbstoffe gemäss Anspruch 7, worin D und D′ unabhängig voneinander je den Rest eines 1-Hydroxy-2-aminobenzols oder 1-Amino-2-hydroxynaphthalins bedeutet, welches noch durch Nitro und/oder Sulfo substituiert ist, und K und K′ unabhängig voneinander je den Rest einer der folgenden Kupplungskomponenten darstellt: gegebenenfalls durch Sulfo und/oder Amino substituiertes 1-Naphthol oder 2-Naphthol, 1- oder 2-Naphthylamin, gegebenenfalls substituiert durch Sulfo, p-Alkyl($C_1$–$C_6$)-phenol, 1-Phenyl-3-methyl-5-pyrazolon oder Acetessigsäureanilid, wobei die Phenylgruppe in den beiden letztgenannten Verbindungen durch $C_1$–$C_4$-Alkyl, $C_1$–$C_4$-Alkoxy, Chlor oder Sulfo substituiert sein kann.

13. Chromkomplexfarbstoffe gemäss Anspruch 12, worin D das gleiche wie D′ und K das gleiche wie K′ bedeutet.

14. Chromkomplexfarbstoffe der Formel (3)

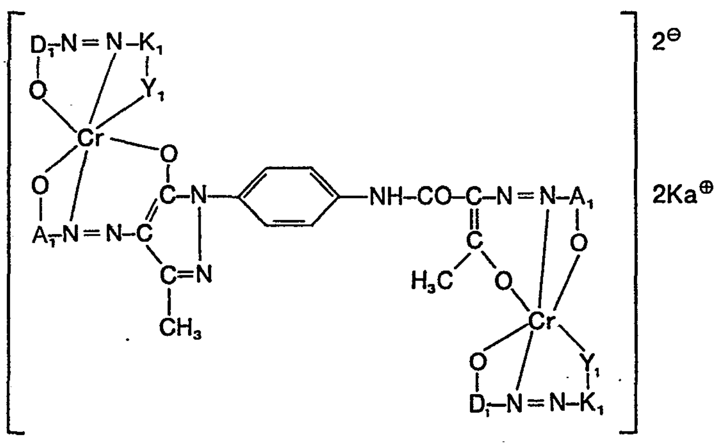

(3)

worin

$D_1$ den Rest eines 1-Hydroxy-2-aminobenzols oder 1-Amino-2-hydroxynaphthalins, welches noch durch Nitro und/oder Sulfo substituiert ist,

$K_1$ den Rest eines gegebenenfalls durch Sulfo und/oder Amino substituierten 1-Naphthols oder 2-Naphthols, 1- oder 2-Naphthylamins, gegebenenfalls substituiert durch Sulfo, p-Alkyl($C_1$–$C_6$)-phenols, 1-Phenyl-3-methyl-5-pyrazolons oder Acetessigsäureanilids, wobei die Phenylgruppe in den beiden letztgenannten Verbindungen durch $C_1$–$C_4$-Alkyl, $C_1$–$C_4$-Alkoxy, Chlor oder Sulfo substituiert sein kann,

$A_1$ den Rest eines 1-Hydroxy-2-aminobenzols, welcher durch Sulfo und/oder Nitro substituiert ist,

$Y_1$ Sauerstoff oder eine NH-Gruppe und

$Ka^{\oplus}$ ein Kation bedeutet.

15. Zwischenprodukt der Formel (4)

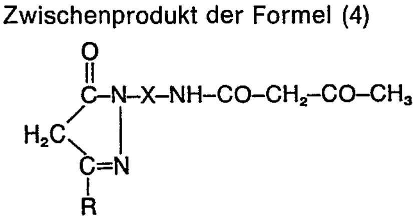

(4)

worin

X gegebenenfalls substituiertes Phenylen, Naphthylen oder $C_2$–$C_4$-Alkylen und

R $C_1$–$C_4$-Alkyl, COO–Q oder $CONQQ_1$ bedeutet, wobei Q und $Q_1$ je Wasserstoff oder $C_1$–$C_4$-Alkyl darstellen.

16. Zwischenprodukte gemäss Anspruch 15, worin X gegebenenfalls substituiertes Phenylen, vorzugsweise unsubstituiertes Phenylen, und R Methyl bedeutet.

17. Verfahren zur Herstellung von Disazofarbstoffen der Formel (1)

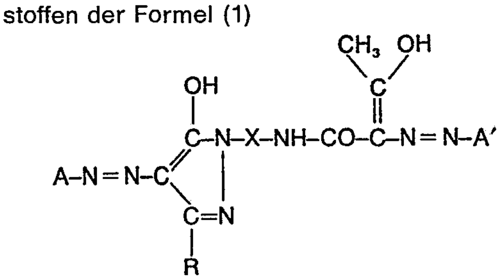

(1),

worin

A und A′ unabhängig voneinander je den Rest einer Diazokomponente der Benzol- oder Naphthalinreihe bedeuten, wobei mindestens eine der Gruppen A oder A′ in o-Stellung zur Azogruppe eine metallisierbare Hydroxy- oder Carboxygruppe trägt, und

X gegebenenfalls substituiertes Phenylen, Naphthylen oder $C_2$–$C_4$-Alkylen und

R $C_1$–$C_4$-Alkyl, COO–Q oder $CONQQ_1$ bedeutet, wobei Q und $Q_1$ je Wasserstoff oder $C_1$–$C_4$-Alkyl darstellen, dadurch gekennzeichnet, dass man eine Verbindung der Formel (4)

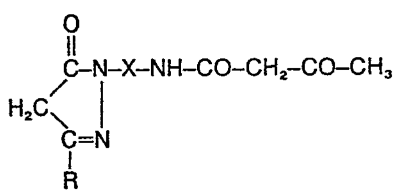

(4)

mit einer Diazoniumverbindung eines Amins der Formel $A$–$NH_2$ und/oder $A'$–$NH_2$ kuppelt.

18. Verfahren gemäss Anspruch 17, dadurch gekennzeichnet, dass man eine Verbindung der Formel (4)

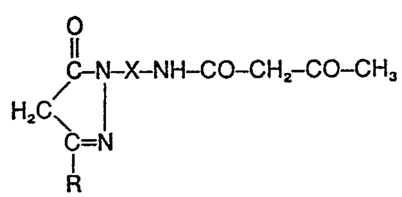

(4)

worin X gegebenenfalls substituiertes Phenylen und R Methyl bedeutet, mit einer Diazoniumverbindung eines Amins der Formel $A$–$NH_2$ kuppelt, wobei A einen Rest der Hydroxybenzolreihe bedeutet, der durch Sulfo und/oder Nitro substituiert ist.

19. Verfahren zur Herstellung von Metallkomplexfarbstoffen, enthaltend mindestens einen Disazofarbstoff der Formel (1)

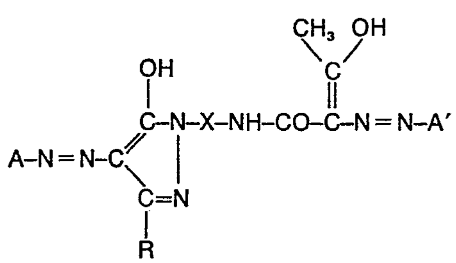

(1),

worin

A und A′ unabhängig voneinander je den Rest einer Diazokomponente der Benzol- oder Naphthalinreihe bedeuten, wobei mindestens eine der Gruppen A oder A′ in o-Stellung zur Azogruppe eine metallisierbare Hydroxy- oder Carboxygruppe trägt,

X gegebenenfalls substituiertes Phenylen, Naphthylen oder $C_2$–$C_4$-Alkylen und

R $C_1$–$C_4$-Alkyl, COO–Q oder $CONQQ_1$ bedeutet, wobei Q und $Q_1$ je Wasserstoff oder $C_1$–$C_4$-Alkyl darstellen, dadurch gekennzeichnet, dass man einen Disazofarbstoff der Formel (1) mit einem metallabgebenden Mittel umsetzt.

20. Verfahren zur Herstellung von Chromkomplexfarbstoffen der Formel (2)

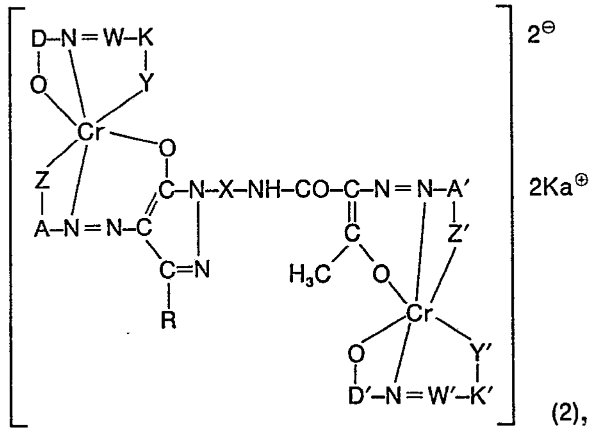

(2),

worin

A und A′ unabhängig voneinander je den Rest einer Diazokomponente der Benzol- oder Naphthalinreihe bedeutet, welcher die komplexbildende Gruppe Z bzw. Z′ in o-Stellung zur Azogruppe trägt,

X gegebenenfalls substituiertes Phenylen, Naphthylen oder $C_2$–$C_4$-Alkylen,

R $C_1$–$C_4$-Alkyl, COOQ oder $CONQQ_1$, wobei Q und $Q_1$ je Wasserstoff oder $C_1$–$C_4$-Alkyl darstellen,

Z und Z′ unabhängig voneinander je Sauerstoff oder eine –CO–O-Gruppe,

W und W′ unabhängig voneinander je ein Stickstoffatom oder eine CH-Gruppe,

Y und Y′ unabhängig voneinander je ein Sauerstoffatom oder eine NH-Gruppe, wobei Y bzw. Y′ ein Sauerstoffatom sein muss, wenn W bzw. W′ eine CH-Gruppe ist,

D und D′ unabhängig voneinander je den Rest einer Diazokomponente der Benzol- oder Naphthalinreihe, welche die komplexbildende Hydroxygruppe in o-Stellung zur Azogruppe trägt,

K und K′ unabhängig voneinander je den Rest einer in o-Stellung zur Hydroxy- bzw. NH-Gruppe kuppelnden Kupplungskomponente, falls W bzw. W′ ein Stickstoffatom bedeutet, oder, falls W bzw. W′ die CH-Gruppe bedeutet, den Rest eines o-Hydroxyaldehyds, und

$Ka^{\oplus}$ ein Kation

bedeutet, dadurch gekennzeichnet, dass man einen Disazofarbstoff der Formel (1)

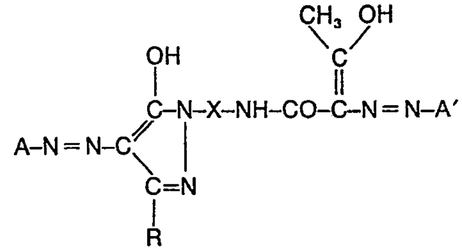

(1),

in Gegenwart eines metallabgebenden Mittels im Verhältnis von ca. 1 : 2 mit einem Azo- bzw. Azomethinfarbstoff der Formel (5) und/oder (6)

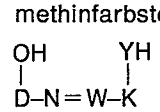

(5)

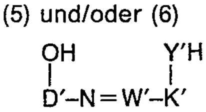

(6)

umsetzt, worin D, W, K, Y, D', W', Y' und K' die oben angegebene Bedeutung aufweisen.

21. Verfahren zur Herstellung von Chromkomplexfarbstoffen der Formel (2)

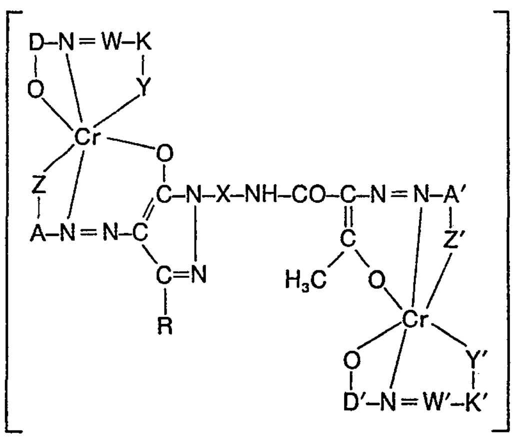

$2^{\ominus}$ $2Ka^{\oplus}$ (2)

worin

A und A' unabhängig voneinander je den Rest einer Diazokomponente der Benzol- oder Naphthalinreihe bedeutet, welcher die komplexbildende Gruppe Z bzw. Z' in o-Stellung zur Azogruppe trägt,

X gegebenenfalls substituiertes Phenylen, Naphthylen oder $C_2$–$C_4$-Alkylen,

R $C_1$–$C_4$-Alkyl, COOQ oder $CONQQ_1$, wobei Q und $Q_1$ je Wasserstoff oder $C_1$–$C_4$-Alkyl darstellen,

Z und Z' unabhängig voneinander je Sauerstoff oder eine –CO–O-Gruppe,

W und W' unabhängig voneinander je ein Stickstoffatom oder eine CH-Gruppe,

Y und Y' unabhängig voneinander je ein Sauerstoffatom oder eine NH-Gruppe, wobei Y bzw. Y' ein Sauerstoffatom sein muss, wenn W bzw. W' eine CH-Gruppe ist,

D und D' unabhängig voneinander je den Rest einer Diazokomponente der Benzol- oder Naphthalinreihe, welche die komplexbildende Hydroxygruppe in o-Stellung zur Azogruppe trägt,

K und K' unabhängig voneinander je den Rest einer in o-Stellung zur Hydroxy- bzw. NH-Gruppe kuppelnden Kupplungskomponente, falls W bzw. W' ein Stickstoffatom bedeutet, oder, falls W bzw. W' die CH-Gruppe bedeutet, den Rest eines o-Hydroxyaldehyds, und

$Ka^{\oplus}$ ein Kation

bedeutet, dadurch gekennzeichnet, dass man einen Disazofarbstoff der Formel (1)

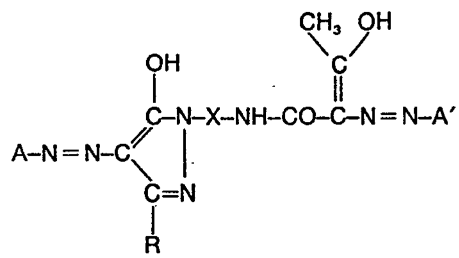

(1),

im Verhältnis von ca. 1 : 2 mit einem Metallkomplexfarbstoff der Formel (8) und/oder (9)

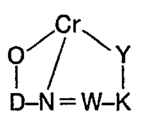

(8)

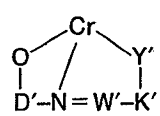

(9)

umsetzt.

22. Verfahren zur Herstellung von Chromkomplexfarbstoffen der Formel (3)

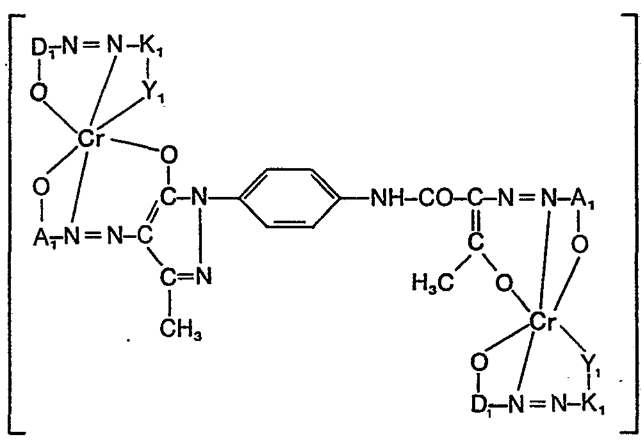

$2^{\ominus}$ $2Ka^{\oplus}$ (3)

worin

$D_1$ den Rest eines 1-Hydroxy-2-aminobenzols oder 1-Amino-2-hydroxynaphthalins, welches noch durch Nitro und/oder Sulfo substituiert ist,

$K_1$ den Rest eines gegebenenfalls durch Sulfo und/oder Amino substituierten 1-Naphthols oder 2-Naphthols, eines in p-Stellung durch $C_1$–$C_6$-Alkyl substituierten Phenols, eines gegebenenfalls durch Sulfo substituierten 1- oder 2-Naphthylamins, oder den Rest eines 1-Phenyl-3-methyl-5-pyrazolons oder Acetessigsäureanilids, wobei die Phenylgruppe in den beiden letztgenannten Verbindungen durch $C_1$–$C_4$-Alkyl, $C_1$–$C_4$-Alkoxy, Chlor oder Sulfo substituiert sein kann,

$Y_1$ Sauerstoff oder eine NH-Gruppe

$Ka^{\oplus}$ ein Kation und

$A_1$ den Rest eines 1-Hydroxy-2-aminobenzols bedeutet, welcher durch Sulfo und/oder Nitro substituiert ist,

dadurch gekennzeichnet, dass man einen Disazofarbstoff der Formel (11)

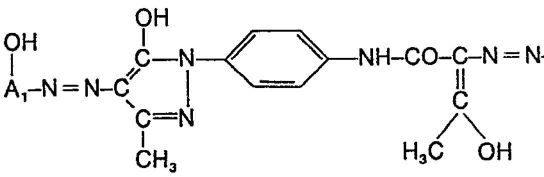

(11),

im Verhältnis von ca. 1 : 2 mit einem 1 : 1-Chromkomplexfarbstoff der Formel (12)

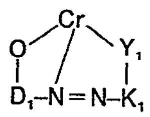

(12)

umsetzt.

23. Verfahren zur Herstellung der Zwischenprodukte der Formel (4)

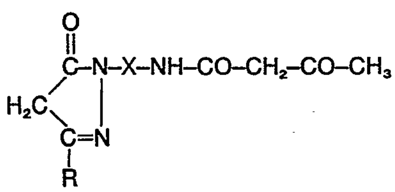

(4)

worin

X gegebenenfalls substituiertes Phenylen, Naphthylen oder $C_2$–$C_4$-Alkylen und

R $C_1$–$C_4$-Alkyl, COO–Q oder CONQ$Q_1$ bedeutet, wobei Q und $Q_1$ je Wasserstoff oder $C_1$–$C_4$-Alkyl darstellen, dadurch gekennzeichnet, dass man ein Pyrazolon der Formel (13)

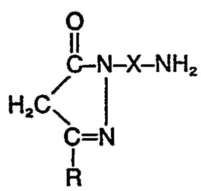

(13)

mit Diketen umsetzt.

24. Verfahren zum Färben oder Bedrucken von natürlichen oder synthetischen Polyamidmaterialien unter Verwendung der gemäss den Ansprüchen 1–14 definierten bzw. gemäss den Ansprüchen 17–22 erhaltenen Farbstoffe.

25. Verfahren zum Färben von Leder unter Verwendung der gemäss den Ansprüchen 6–14 definierten bzw. gemäss den Ansprüchen 19–22 erhaltenen Metallkomplexfarbstoffe.

## Claims

1. A metallisable disazo dye of the formula (1)

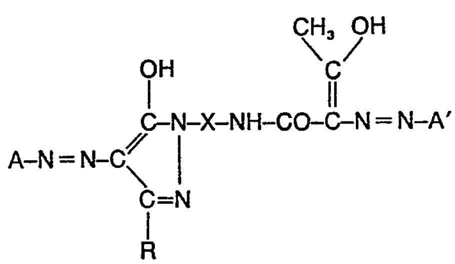

(1)

in which each of

A and A′ independently of the other is the radical of a diazo component of the benzene or naphthalene series, at least one of the groups A or A′ carrying a metallisable hydroxyl or carboxyl group in the o-position relative to the azo group,

X is substituted or unsubstituted phenylene, naphthylene or $C_2$–$C_4$alkylene and

R is $C_1$–$C_4$alkyl, COO–Q or CONQ$Q_1$, in which each of Q and $Q_1$ is hydrogen or $C_1$–$C_4$alkyl.

2. A disazo dye according to claim 1, in which X is substituted or unsubstituted phenylene, R is methyl and A and A′ are as defined in claim 1.

3. A disazo dye according to claim 2, in which X is unsubstituted phenylene.

4. A disazo dye according to any one of claims 1 to 3, in which each of A and A′ is the radical of a 1-hydroxy-2-aminobenzene, which radical is substituted by chlorine, nitro and/or sulfo, in particular the radical of a 1-hydroxy-2-aminonitrobenzene, which radical also carries a sulfo group.

5. A disazo dye according to any one of claims 1 to 4, in which A and A′ are identical.

6. A metal complex dye containing at least one disazo dye of the formula

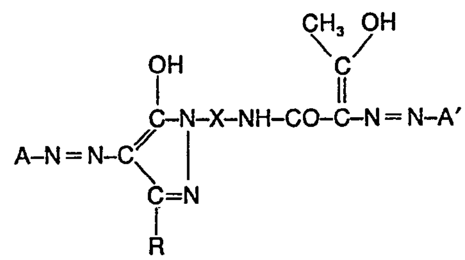

(1)

in which each of

A and A′ independently of the other is the radical of a diazo component of the benzene or naphthalene series, at least one of the groups A or A′ carrying a metallisable hydroxyl or carboxyl group in the o-position relative to the azo group,

X is substituted or unsubstituted phenylene, naphthylene or $C_2$–$C_4$alkylene and

R is $C_1$–$C_4$alkyl, COO–Q or CONQ$Q_1$, in which each of Q and $Q_1$ is hydrogen or $C_1$–$C_4$alkyl.

7. A chromium complex dye according to claim 6 of the formula (2)

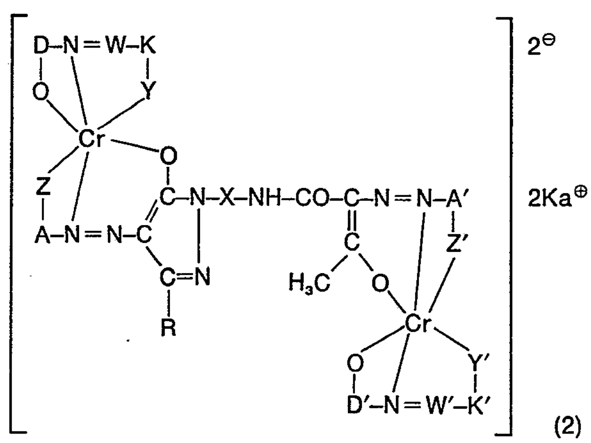

(2)

in which each of

A and A′ independently of the other is the radical of a diazo component of the benzene or naphthalene series which carries the complexing group Z or Z′ in the o-position relative to the azo group,

X is substituted or unsubstituted phenylene, naphthylene or $C_2$–$C_4$alkylene,

R is $C_1$–$C_4$alkyl, COOQ or $CONQQ_1$, in which each of Q and $Q_1$ is hydrogen or $C_1$–$C_4$alkyl, each of

Z and Z′ independently of the other is oxygen or a –CO–O– group, each of

W and W′ independently of the other is a nitrogen atom or a CH group, each of

Y and Y′ independently of the other is an oxygen atom or an NH group, with the proviso that Y and/or Y′ must be an oxygen atom if W and/or W′ is a CH group, each of

D and D′ independently of the other is the radical of a diazo component of the benzene or naphthalene series which carries the complexing hydroxyl group in the o-position relative to the azo group, each of

K and K′ independently of the other is the radical of a coupling component which couples in the o-position relative to the hydroxyl group or NH group, if W and/or W′ is a nitrogen atom, or, if W and/or W′ is the CH group, the radical of an o-hydroxyaldehyde, and

$Ka^{\oplus}$ is a cation.

8. A metal complex dye according to either of claims 6 or 7, in which each of A and A′ is the radical of a 1-hydroxy-2-aminobenzene, which radical is substituted by chlorine, nitro and/or sulfo, in particular the radical of a 1-hydroxy-2-amino-nitrobenzene, which radical may also carry a sulfo group.

9. A metal complex dye according to any one of claims 6–8, in which A and A′ are identical.

10. A metal complex dye according to any one of claims 6–9, in which X is substituted or unsubstituted phenylene and R is methyl.

11. A metal complex dye according to claim 10, in which X is unsubstituted phenylene.

12. A chromium complex dye according to claim 7, in which each of D and D′ independently of the other is the radical of 1-hydroxy-2-aminobenzene or 1-amino-2-hydroxynaphthalene, which radical is also substituted by nitro and/or sulfo and each of K and K′ independently of the other is the radical of one of the following coupling components: 1-naphthol or 2-naphthol, each unsubstituted or substituted by sulfo and/or amino, 1- or 2-naphthylamine which is unsubstituted or substituted by sulfo, p-($C_1$–$C_6$)alkylphenol, or 1-phenyl-3-methyl-5-pyrazolone or acetoacetanilide, and the phenyl group in the two latter compounds may be substituted by $C_1$–$C_4$alkyl, $C_1$–$C_4$alkoxy, chlorine or sulfo.

13. A chromium complex dye according to claim 12, in which D is identical to D′ and K is identical to K′.

14. A chromium complex dye of the formula (3)

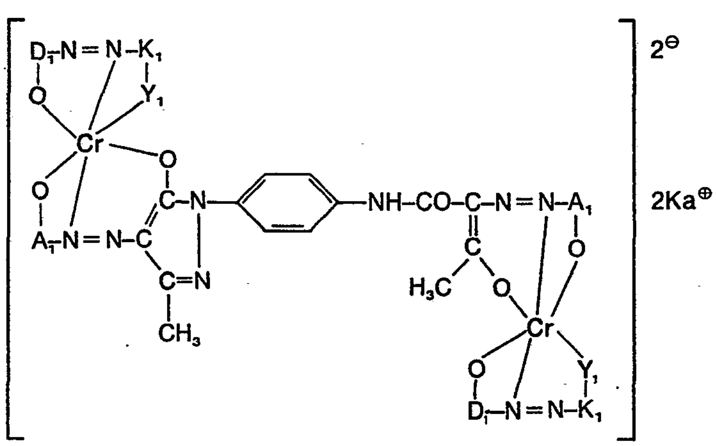

(3)

in which

$D_1$ is the radical of a 1-hydroxy-2-aminobenzene or 1-amino-2-hydroxynaphthalene, which radical is also substituted by nitro and/or sulfo,

$K_1$ is the radical of a 1-naphthol or 2-naphthol which is unsubstituted or substituted by sulfo and/or amino, of a 1- or 2-naphthylamine which is unsubstituted or substituted by sulfo, or of a p-($C_1$–$C_6$)alkyl phenol, 1-phenyl-3-methyl-5-pyrazolone or acetoacetanilide, and the phenyl group in the two latter radicals may be substituted by $C_1$–$C_4$alkyl, $C_1$–$C_4$alkoxy, chlorine or sulfo,

$A_1$ is the radical of a 1-hydroxy-2-aminobenzene, which radical is substituted by sulfo and/or nitro,

$Y_1$ is oxygen or an NH group and

$Ka^{\oplus}$ is a cation.

15. An intermediate of the formula (4)

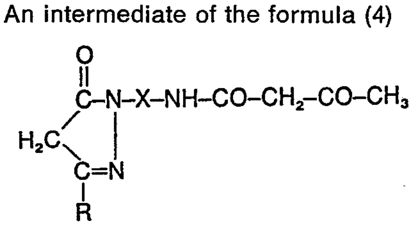

(4)

in which

X is substituted or unsubstituted phenylene, naphthylene or $C_2$–$C_4$alkylene and

R is $C_1$–$C_4$alkyl, COO–Q or $CONQQ_1$, in which each of Q and $Q_1$ is hydrogen or $C_1$–$C_4$alkyl.

16. An intermediate according to claim 15, in which X is substituted or unsubstituted phenylene, preferably unsubstituted phenylene, and R is methyl.

17. A process for the preparation of a disazo dye of the formula (1)

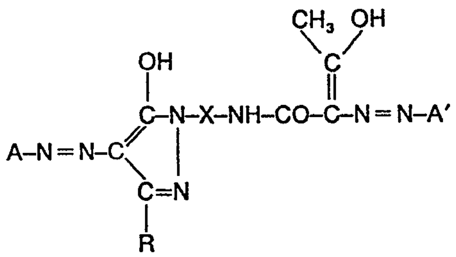

(1)

in which each of

A and A′ independently of the other is the radical of a diazo component of the benzene or naphthalene series, at least one of the groups A or A′ carrying a metallisable hydroxyl or carboxyl group in the o-position relative to the azo group,

X is substituted or unsubstituted phenylene, naphthylene or $C_2$–$C_4$alkylene and

R is $C_1$–$C_4$alkyl, COO–Q or $CONQQ_1$, in which each of Q and $Q_1$ is hydrogen or $C_1$–$C_4$alkyl, which process comprises coupling a compound of the formula (4)

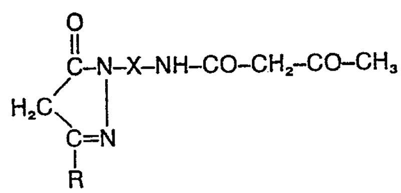

(4)

with a diazonium compound of an amine of the formula $A–NH_2$ and/or $A'–NH_2$.

18. A process according to claim 17, wherein a compound of the formula (4)

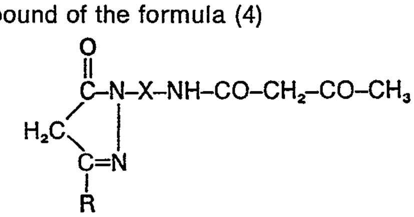

(4)

in which X is substituted or unsubstituted phenylene and R is methyl, is coupled with a diazonium compound of an amine of the formula $A–NH_2$, in which A is a radical of the hydroxybenzene series, which radical is substituted by sulfo and/or nitro.

19. A process for the preparation of a metal complex dye containing at least one disazo dye of the formula (1)

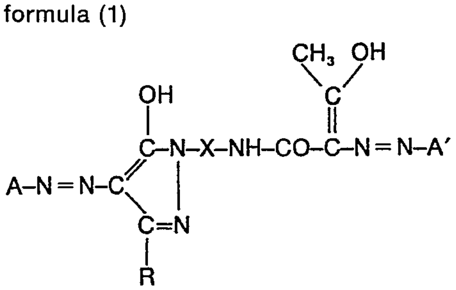

(1)

in which each of

A and A′ independently of the other is the radical of a diazo component of the benzene or naphthalene series, at least one of the groups A or A′ carrying a metallisable hydroxyl or carboxyl group in the o-position relative to the azo group,

X is substituted or unsubstituted phenylene, naphthylene or $C_2$–$C_4$alkylene and

R is $C_1$–$C_4$alkyl, COO–Q or $CONQQ_1$, in which each of Q and $Q_1$ is hydrogen or $C_1$–$C_4$alkyl, which process comprises reacting a disazo dye of the formula (1) with a metal donor.

20. A process for the preparation of a chromium complex dye of the formula (2)

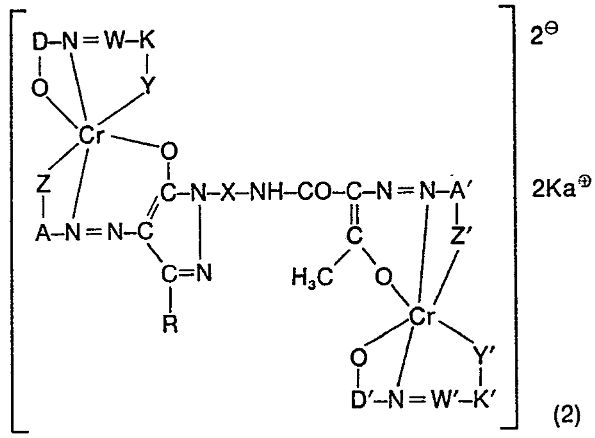

(2)

in which each of

A and A′ independently of the other is the radical of a diazo component of the benzene or naphthalene series which carries the complexing group Z or Z′ in the o-position relative to the azo group,

X is substituted or unsubstituted phenylene, naphthylene or $C_2$–$C_4$alkylene,

R is $C_1$–$C_4$alkyl, COOQ or $CONQQ_1$, in which each of Q and $Q_1$ is hydrogen or $C_1$–$C_4$alkyl, each of

Z and Z′ independently of the other is oxygen or a –CQ–O– group, each of

W and W′ independently of the other is a nitrogen atom or a CH group, each of

Y and Y′ independently of the other is an oxygen atom or an NH group, with the proviso that Y and/or Y′ must be an oxygem atom if W and/or W′ is a CH group, each of

D and D′ independently of the other is the radical of a diazo component of the benzene or naphthalene series which carries the complexing hydroxyl group in the o-position relative to the azo group, each of

K and K′ independently of the other is the radical of a coupling component which couples in the o-position relative to the hydroxyl group or NH group, if W and/or W′ is a nitrogen atom, or, if W and/or W′ is the CH group, the radical of an o-hydroxyaldehyde, and

$Ka^{\oplus}$ is a cation, which process comprises reacting a disazo dye of the formula (1)

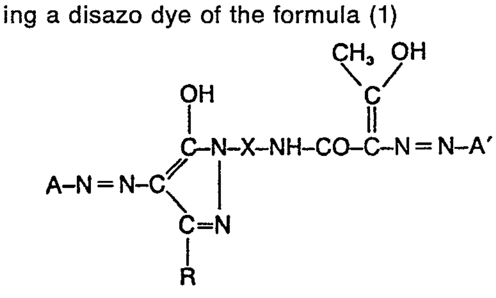

(1)

with an azo or azomethine dye of the formula (5) and/or (6)

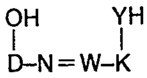
(5)

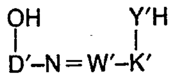
(6)

in which formulae D, W, K, Y, D′, W′, Y′ and K′ are as defined above, in a ratio of about 1 : 2 in the presence of a metal donor.

21. A process for the preparation of a chromium complex dye of the formula (2)

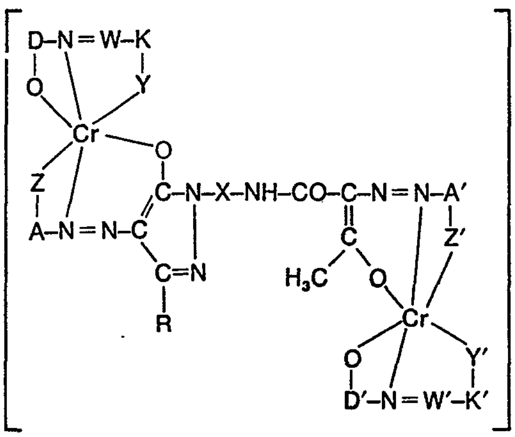
$2^{\ominus}$

$2Ka^{\oplus}$

(2)

in which each of

A and A′ independently of the other is the radical of a diazo component of the benzene or naphthalene series which carries the complexing group Z or Z′ in the o-position relative to the azo group, X is substituted or unsubstituted phenylene, naphthylene or $C_2$–$C_4$alkylene, R is $C_1$–$C_4$alkyl, COOQ or $CONQQ_1$, in which each of Q and $Q_1$ is hydrogen or $C_1$–$C_4$alkyl, each of

Z and Z′ independently of the other is oxygen or a –CO–O– group, each of

W and W′ independently of the other is a nitrogen atom or a CH group, each of

Y and Y′ independently of the other is an oxygen atom or an NH group, with the proviso that Y and/or Y′ must be an oxygen atom if W and/or W′ is a CH group, each of

D and D′ independently of the other is the radical of a diazo component of the benzene or naphthalene series which carries the complexing hydroxyl group in the o-position relative to the azo group, each of

K and K′ independently of the other is the radical of a coupling component which couples in the o-position relative to the hydroxyl group or NH group, if W and/or W′ is a nitrogen atom, or, if W and/or W′ is the CH group, the radical of an o-hydroxyaldehyde, and

$Ka^{\oplus}$ is a cation, which process comprises reacting a disazo dye of the formula (1)

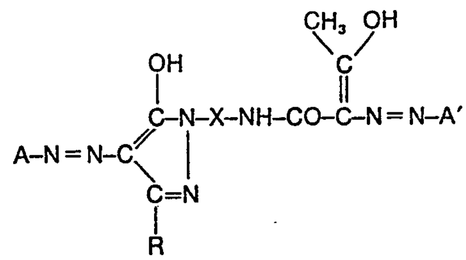
(1)

with a metal complex dye of the formula (8) and/or (9)

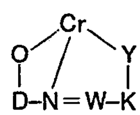
(8)

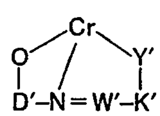
(9)

in a ratio of about 1 : 2.

22. A process for the preparation of a chromium complex dye of the formula (3)

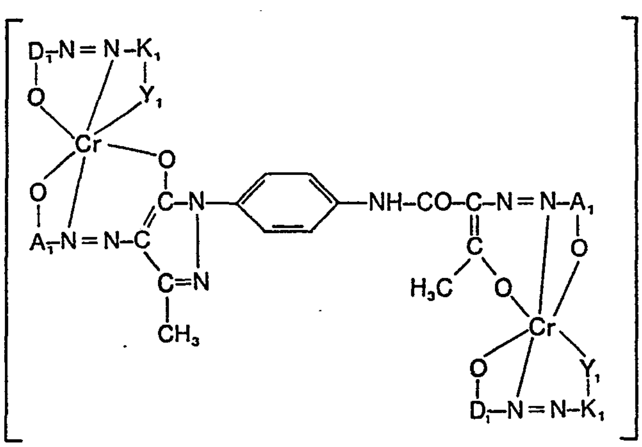
$2^{\ominus}$

$2Ka^{\oplus}$

(3)

in which

$D_1$ is the radical of a 1-hydroxy-2-aminobenzene or 1-amino-2-hydroxynaphthalene, which radical is also substituted by nitro and/or sulfo,

$K_1$ is the radical of a 1-naphthol or 2-naphthol which is unsubstituted or substituted by sulfo and/or amino, of a phenol which is substituted in the p-position by $C_1$–$C_6$alkyl, of a 1- or 2-naphthylamine which is unsubstituted or substituted by sulfo, or is the radical of a 1-phenyl-3-methyl-5-pyrazolone or acetoacetanilide, and the phenyl group in the two latter radicals may be substituted by $C_1$–$C_4$alkyl, $C_1$–$C_4$alkoxy, chlorine or sulfo,

$Y_1$ is oxygen or an NH group,

Ka$^{\oplus}$ is a cation and

$A_1$ is the radical of a 1-hydroxy-2-aminobenzene, which radical is substituted by sulfo and/or nitro, which process comprises reacting a disazo dye of the formula (11)

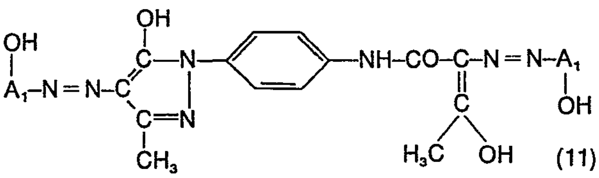

(11)

with a 1 : 1 chromium complex dye of the formula (12)

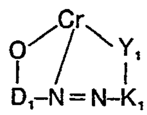

(12)

in a ratio of about 1 : 2.

23. A process for the preparation of an intermediate of the formula (4)

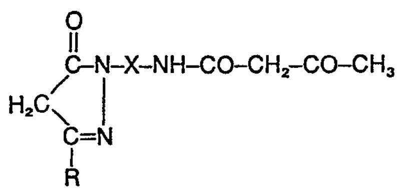

(4)

in which

X is substituted or unsubstituted phenylene, naphthylene or $C_2$–$C_4$alkylene and

R is $C_1$–$C_4$alkyl, COO–Q or $CONQQ_1$, in which each of Q and $Q_1$ is hydrogen or $C_1$–$C_4$alkyl, which process comprises reacting a pyrazolone of the formula (13)

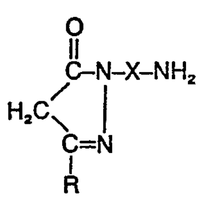

(13)

with diketene.

24. A process for dyeing or printing natural or synthetic polyamide materials using a dye defined according to any one of claims 1–14 or obtained according to any one of claims 17–22.

25. A process for dyeing leather, which comprises the use of a metal complex dye defined according to any one of claims 6–14 or obtained according to any one of claims 19–22.

## Revendications

1. Colorants disazoïques métallables de formule (1)

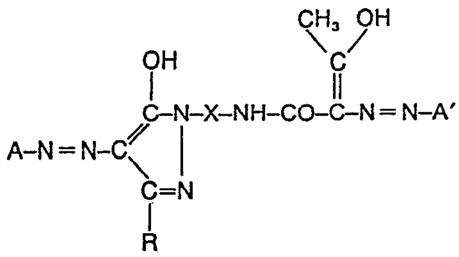

(1),

dans laquelle

A et A′ représentent chacun, indépendamment l'un de l'autre, le reste d'un composant diazoïque de la série du benzène ou de celle du naphtalène, au moins un des radicaux A ou A′ comportant un groupe hydroxyle ou carboxyle métallable en position ortho par rapport au groupement azoïque;

X représente un radical phénylène, naphtylène, ou alkylène en $C_2$–$C_4$, éventuellement substitués, et

R représente un radical alkyle en $C_1$–$C_4$, COO–Q ou $CONQQ_1$, Q et $Q_1$ étant chacun un atome d'hydrogène ou un groupe alkyle en $C_1$–$C_4$.

2. Colorants disazoïques selon la revendication 1, dans lesquels X est un radical phénylène éventuellement substitué et R représente un radical méthyle et A et A′ ont la signification donnée dans la revendication 1.

3. Colorants disazoïques selon la revendication 2, dans lesquels X est un radical phénylène non substitué.

4. Colorants disazoïques selon les revendications 1 à 3, dans lesquels A et A′ représentent chaque fois le reste d'un 1-hydroxy-2-aminobenzène qui est substitué par un groupe chloro, nitro et/ou sulfo, en particulier le reste d'un 1-hydroxy-2-amino-nitrobenzène qui porte encore un groupe sulfo.

5. Colorants disazoïques selon les revendications 1–4, dans lesquels A et A′ représentent le même reste.

6. Colorants à complexe métallifère, comprenant au moins un colorant disazoïque de formule

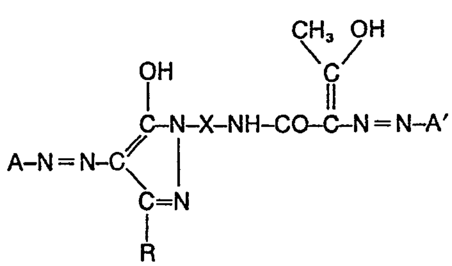

(1),

dans laquelle

A et A′ représentent chacun, indépendamment l'un de l'autre, le reste d'un composant diazoïque de la série du benzène ou de celle du naphtalène, au moins un des radicaux A ou A′ comportant un groupe hydroxyle ou carboxyle métallable en position ortho par rapport au groupement azoïque;

X représente un radical phénylène, naphtylène, ou alkylène en $C_2$–$C_4$, éventuellement substitués, et

R représente un radical alkyle en $C_1$–$C_4$, COO–Q ou $CONQQ_1$, Q et $Q_1$ étant chacun un atome d'hydrogène ou un groupe alkyle en $C_1$–$C_4$.

7. Colorants à complexe de chrome selon la revendication 6, de formule (2)

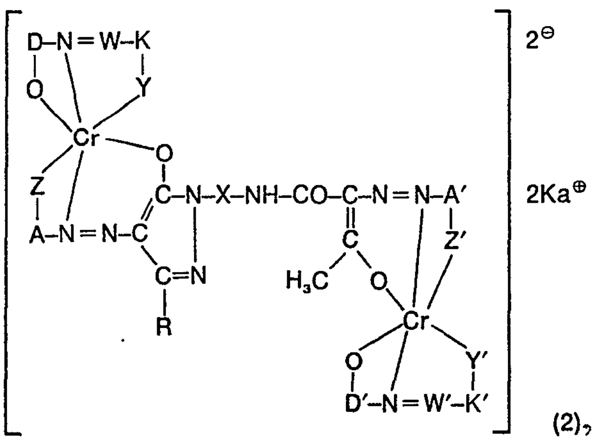

(2),

dans laquelle

A et A′ représentent chacun, indépendamment l'un de l'autre, le reste d'un composant diazoïque de la série du benzène ou de celle du naphtalène, qui comporte le groupe complexant Z ou Z′ en position ortho par rapport au groupement azoïque;

X représente un radical phénylène, naphtylène, ou alkylène en $C_2$–$C_4$, éventuellement substitués;

R représente un radical alkyle en $C_1$–$C_4$, COOQ ou $CONQQ_1$, Q et $Q_1$ étant chacun un atome d'hydrogène ou un groupe alkyle en $C_1$–$C_4$;

Z et Z′ sont chacun, indépendamment l'un de l'autre, un atome d'oxygène ou un groupe –CO–O–;

W et W′ sont chacun, indépendamment l'un de l'autre, un atome d'azote ou un groupe –CH;

Y et Y′ sont chacun, indépendamment l'un de l'autre, un atome d'oxygène ou un groupe –NH, Y ou Y′, respectivement, devant être un atome d'oxygène lorsque W ou W′ est un groupe –CH;

D et D′ sont chacun, indépendamment l'un de l'autre, le reste d'un composant diazoïque de la série du benzène ou de celle du naphtalène, qui comporte le groupe hydroxyle complexant en position ortho par rapport au groupement azoïque;

K et K′ sont chacun, indépendamment l'un de l'autre, le reste d'un composant de copulation copulant en position ortho par rapport au groupe hydroxyle ou –NH dans le cas où W ou W′ représente un atome d'azote ou bien, dans celui où W ou W′ représente le groupe –CH, le reste d'un o-hydroxy-aldéhyde; et

$Ka^{\oplus}$ représente un cation.

8. Colorants à complexe métallifère selon les revendications 6 ou 7, dans lesquels A et A′ représentent chaque fois le reste d'un 1-hydroxy-2-aminobenzène qui est substitué par un groupe chloro, nitro et/ou sulfo, en particulier le reste d'un 1-hydroxy-2-amino-nitrobenzène qui porte éventuellement encore un groupe sulfo.

9. Colorants à complexe métallifère selon les revendications 6–8, dans lesquels A et A′ représentent le même reste.

10. Colorants à complexe métallifère selon les revendications 6–9, dans lesquels X représente un radical phénylène éventuellement substitué et R un radical méthyle.

11. Colorants à complexe métallifère selon la revendication 10, dans lesquels X représente un radical phénylène non substitué.

12. Colorants à complexe de chrome selon la revendication 7, dans lesquels D et D′ représentent chacun, indépendamment l'un de l'autre, le reste d'un 1-hydroxy-2-aminobenzène ou d'un 1-amino-2-hydroxynaphtalène qui est encore substitué par un groupe nitro et/ou un groupe sulfo, et K et K′ représentent chacun, indépendamment l'un de l'autre, le reste d'un des composants de copulation suivants: 1-naphtol ou 2-naphtol éventuellement substitué par un groupe sulfo et/ou un groupe amino, 1- ou 2-naphtylamine éventuellement substituée par un groupe sulfo, p-alkyl($C_1$–$C_6$)-phénol, 1-phényl-3-méthyl-5-pyrazolone ou acétylacétanilide, le radical phényle dans les deux composés cités en dernier pouvant être substitué par un groupe alkyle en $C_1$–$C_4$, alcoxy en $C_1$–$C_4$, chloro ou sulfo.

13. Colorants à complexe de chrome selon la revendication 12, dans lesquels D représente le même reste que D′ et K le même reste que K′.

14. Colorants à complexe de chrome de formule (3)

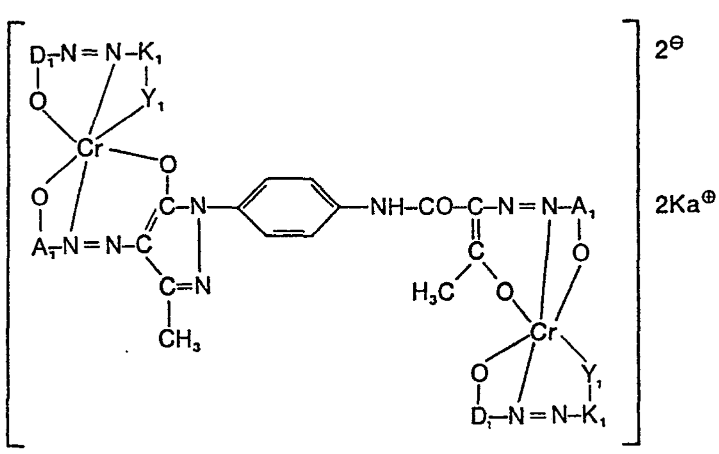

(3)

dans laquelle

$D_1$ est le reste d'un 1-hydroxy-2-aminobenzène ou d'un 1-amino-2-hydroxynaphtalène qui est encore substitué par un groupe nitro et/ou par un groupe sulfo;

$K_1$ est le reste d'un 1-naphtol ou d'un 2-naphtol éventuellement substitué par un groupe sulfo et/ou par un groupe amino, d'une 1- ou 2-naphtylamine éventuellement substituée par un groupe sulfo, d'un p-alkyl($C_1$–$C_6$)-phénol, d'une 1-phényl-3-méthyl-5-pyrazolone ou d'un acétylacétanilide, le radical phényle dans les deux composés cités en dernier pouvant être substitué par un groupe alkyle en $C_1$–$C_4$, alcoxy en $C_1$–$C_4$, chloro ou sulfo;

$A_1$ est le reste d'un 1-hydroxy-2-aminobenzène qui est substitué par un groupe sulfo et/ou un groupe nitro;

$Y_1$ représente un atome d'oxygène ou un groupe –NH;

$Ka^{\oplus}$ représente un cation.

15. Produit intermédiaire de formule (4)

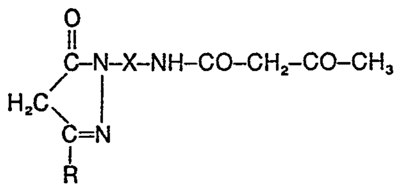
(4)

dans laquelle

X représente un radical phénylène, naphtylène, ou alkylène en $C_2$–$C_4$, éventuellement substitués, et

R représente un radical alkyle en $C_1$–$C_4$, COO–Q ou $CONQQ_1$, Q et $Q_1$ représentant chacun un atome d'hydrogène ou un groupe alkyle en $C_1$–$C_4$.

16. Produits intermédiaires selon la revendication 15, dans lesquels X représente un radical phénylène éventuellement substitué, préférablement un radical phénylène non substitué, et R représente un radical méthyle.

17. Procédé pour la préparation de colorants disazoïques de formule (1)

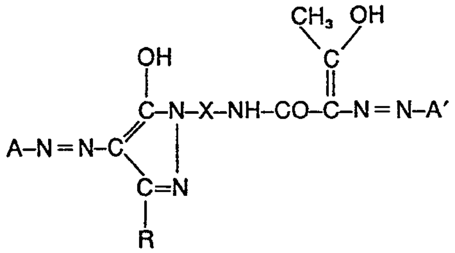
(1),

dans laquelle

A et A′ représentent chacun, indépendamment l'un de l'autre, le reste d'un composant diazoïque de la série du benzène ou de celle du naphtalène, au moins un des radicaux A ou A′ comportant un groupe hydroxyle ou carboxyle métallable en position ortho par rapport au groupement azoïque, et

X représente un radical phénylène, naphtylène, ou alkylène en $C_2$–$C_4$, éventuellement substitués, et

R représente un radical alkyle en $C_1$–$C_4$, COO–Q ou $CONQQ_1$, Q et $Q_1$ étant chacun un atome d'hydrogène ou un groupe alkyle en $C_1$–$C_4$, caractérisé par le fait que l'on effectue la copulation d'un composé de formule (4)

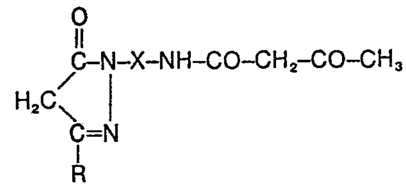
(4)

avec un composé diazonium d'une amine de formule $A–NH_2$ et/ou de formule $A'–NH_2$.

18. Procédé selon la revendication 17, caractérisé par le fait que l'on effectue la copulation d'un composé de formule (4)

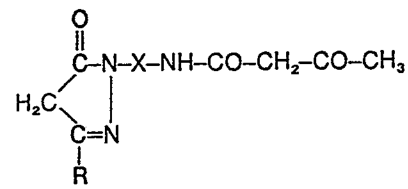
(4)

dans laquelle X représente un radical phénylène éventuellement substitué et R un groupe méthyle, avec un composé diazonium d'une amine de formule $A–NH_2$, A représentant un reste de la série de l'hydroxybenzène qui est substitué par un groupe sulfo et/ou par un groupe nitro.

19. Procédé pour la préparation de colorants à complexe métallifère contenant au moins un colorant disazoïque de formule (1)

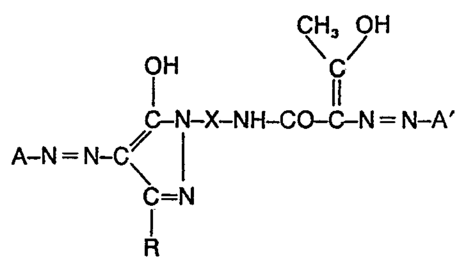
(1),

dans laquelle

A et A′ représentent chacun, indépendamment l'un de l'autre, le reste d'un composant diazoïque de la série du benzène ou de celle du naphtalène, au moins un des radicaux A ou A′ comportant un groupe hydroxyle ou carboxyle métallable en position ortho par rapport au groupement azoïque;

X représente un radical phénylène, naphtylène, ou alkylène en $C_2$–$C_4$, éventuellement substitués, et

R représente un radical alkyle en $C_1$–$C_4$, COO–Q ou $CONQQ_1$, Q et $Q_1$ étant chacun un atome d'hydrogène ou un groupe alkyle en $C_1$–$C_4$, caractérisé par le fait que l'on fait réagir un colorant disazoïque de formule (1) avec un agent donneur de métal.

20. Procédé pour la préparation de colorants à complexe de chrome de formule (2)

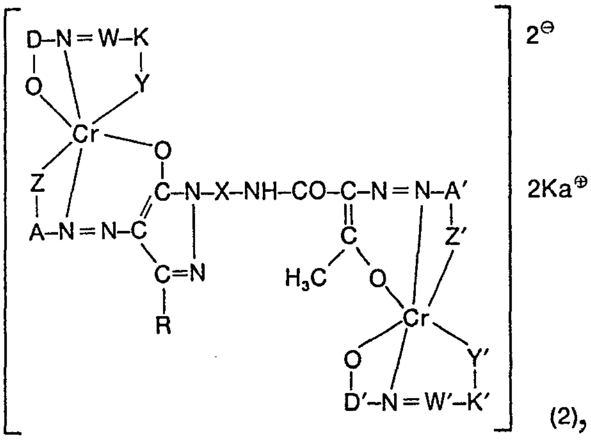

(2),

dans laquelle

A et A′ représentent chacun, indépendamment l'un de l'autre, le reste d'un composant diazoïque de la série du benzène ou de celle du naphtalène, qui comporte le groupe complexant Z ou Z′ en position ortho par rapport au groupement azoïque;

X représente un radical phénylène, naphtylène, ou alkylène en $C_2$–$C_4$, éventuellement substitués;

R représente un radical alkyle en $C_1$–$C_4$, COOQ ou $CONQQ_1$, Q et $Q_1$ étant chacun un atome d'hydrogène ou un groupe alkyle en $C_1$–$C_4$;

Z et Z′ sont chacun, indépendamment l'un de l'autre, un atome d'oxygène ou un groupe –CO–O–;

W et W′ sont chacun, indépendamment l'un de l'autre, un atome d'azote ou un groupe –CH;

Y et Y′ sont chacun, indépendamment l'un de l'autre, un atome d'oxygène ou un groupe –NH, Y ou Y′, respectivement, devant être un atome d'oxygène lorsque W ou W′ est un groupe –CH;

D et D′ sont chacun, indépendamment l'un de l'autre, le reste d'un composant diazoïque de la série du benzène ou de celle du naphtalène, qui comporte le groupe hydroxyle complexant en position ortho par rapport au groupement azoïque;

K et K′ sont chacun, indépendamment l'un de l'autre, le reste d'un composant de copulation copulant en position ortho par rapport au groupe hydroxyle ou –NH dans le cas où W ou W′ représente un atome d'azote ou bien, dans celui où W ou W′ représente le groupe –CH, le reste d'un o-hydroxy-aldéhyde; et

$Ka^{\oplus}$ représente un cation,

caractérisé par le fait que l'on fait réagir un colorant disazoïque de formule (1)

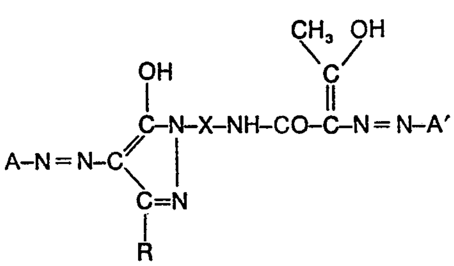

(1),

en présence d'un agent donneur de métal dans la proportion d'environ 1 : 2 avec un colorant azoïque ou azométhine de formule (5) et/ou de formule (6)

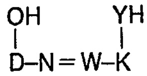 (5) 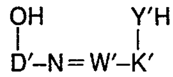 (6)

dans lesquelles D, W, K, Y, D′, W′, Y′ et K′ ont les significations données plus haut.

21. Procédé pour la préparation de colorants à complexe de chrome de formule (2)

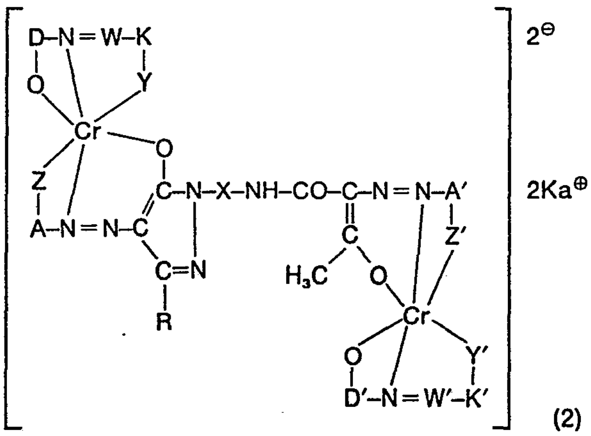

(2)

dans laquelle

A et A′ représentent chacun, indépendamment l'un de l'autre, le reste d'un composant diazoïque de la série du benzène ou de celle du naphtalène, qui comporte le groupe complexant Z ou Z′ en position ortho par rapport au groupement azoïque;

X représente un radical phénylène, naphtylène, ou alkylène en $C_2$–$C_4$ éventuellement substitués;

R représente un radical alkyle en $C_1$–$C_4$, COOQ ou $CONQQ_1$, Q et $Q_1$ étant chacun un atome d'hydrogène ou un groupe alkyle en $C_1$–$C_4$;

Z et Z′ sont chacun, indépendamment l'un de l'autre, un atome d'oxygène ou un groupe –CO–O–;

W et W′ sont chacun, indépendamment l'un de l'autre, un atome d'azote ou un groupe –CH;

Y et Y′ sont chacun, indépendamment l'un de l'autre, un atome d'oxygène ou un groupe –NH, Y ou Y′, respectivement, devant être un atome d'oxygène lorsque W ou W′ est un groupe –CH;

D et D′ sont chacun, indépendamment l'un de l'autre, le reste d'un composant diazoïque de la série du benzène ou de celle du naphtalène, qui comporte le groupe hydroxyle complexant en position ortho par rapport au groupement azoïque;

K et K′ sont chacun, indépendamment l'un de l'autre, le reste d'un composant de copulation copulant en position ortho par rapport au groupe hydroxyle ou –NH dans le cas où W ou W′ représente un atome d'azote ou bien, dans celui où W ou W′ représente le groupe –CH, le reste d'un o-hydroxy-aldéhyde; et

$Ka^{\oplus}$ représente un cation,

caractérisé par le fait que l'on fait réagir un colorant disazoïque de formule (1)

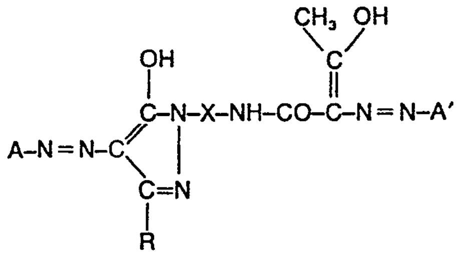

(1)

dans la proportion d'environ 1 : 2 avec un colorant à complexe métallifère de formule (8) et/ou de formule (9)

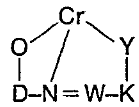

(8)

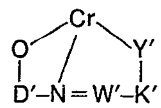

(9)

22. Procédé pour la préparation de colorants à complexe de chrome de formule (3)

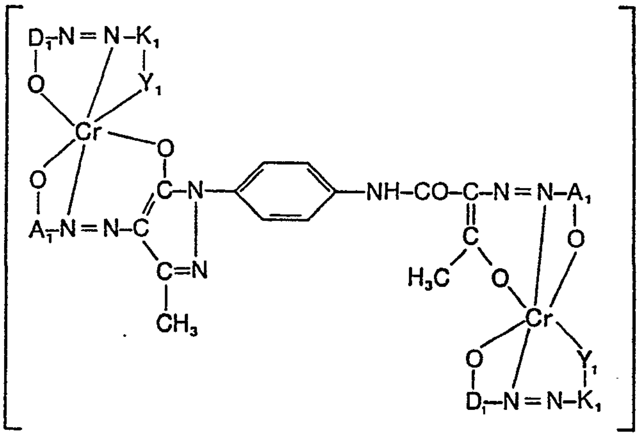

$2^{\ominus}$

$2Ka^{\oplus}$ (3)

dans laquelle

$D_1$ est le reste d'un 1-hydroxy-2-aminobenzène ou d'un 1-amino-2-hydroxynaphtalène qui est encore substitué par un groupe nitro et/ou un groupe sulfo;

$K_1$ représente le reste d'un 1-naphtol ou d'un 2-naphtol éventuellement substitué par un groupe sulfo et/ou un groupe amino, d'un phénol substitué en position para avec un groupe alkyle en $C_1$–$C_6$, d'une 1- ou 2-naphtylamine éventuellement substituée par un groupe sulfo, ou bien le reste d'une 1-phényl-3-méthyl-5-pyrazolone ou d'un acétylacétanilide, le radical phényle dans les deux composés cités en dernier pouvant être substitué par un groupe alkyle en $C_1$–$C_4$, alcoxy en $C_1$–$C_4$, chloro ou sulfo;

$Y_1$ représente un atome d'oxygène ou un groupe –NH;

$Ka^{\oplus}$ représente un cation; et

$A_1$ représente le reste d'un 1-hydroxy-2-aminobenzène qui est substitué par un groupe sulfo et/ou un groupe nitro,

caractérisé par le fait que l'on fait réagir un colorant disazoïque de formule (11)

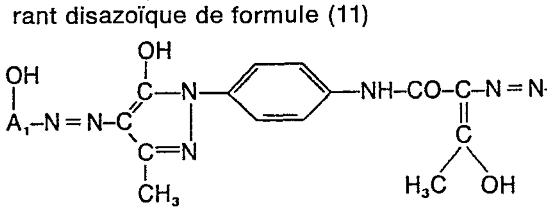

(11),

dans la proportion d'environ 1 : 2 avec un colorant à complexe de chrome 1 : 1 de formule (12)

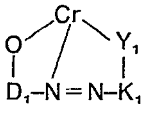

(12),

23. Procédé pour la préparation des produits intermédiaires de formule (4)

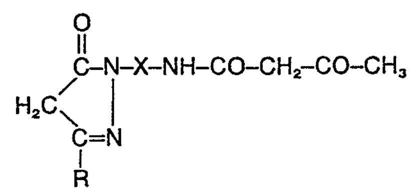

(4)

dans laquelle

X représente un radical phénylène, naphtylène, ou alkylène en $C_2$–$C_4$, éventuellement substitués, et

R représente un radical alkyle en $C_1$–$C_4$, COO–Q ou $CONQQ_1$, Q et $Q_1$ représentant chacun un atome d'hydrogène ou un groupe alkyle en $C_1$–$C_4$, caractérisé par le fait que l'on fait réagir une pyrazolone de formule (13)

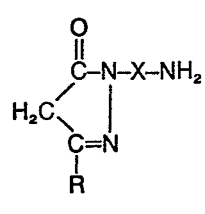

(13)

avec le dicétène.

24. Procédé pour la teinture ou l'impression de matériaux de polyamides synthétiques ou naturels par utilisation des colorants définis selon les revendications 1–14 ou obtenus selon les revendications 17–22.

25. Procédé pour la teinture du cuir par utilisation des colorants à complexe métallifère définis selon les revendications 6–14 ou obtenus selon les revendications 19–22.